# EUROPEAN PATENT SPECIFICATION

(11) **EP 1 400 038 B1**
(45) Date of publication and mention of the grant of the patent: **25.04.2007**
(21) Application number: 01998060.6
(22) Date of filing: 17.12.2001
(51) Int. Cl.: H04B 7/185

(54) **DIPLEXER/SWITCH CIRCUIT WITH MODEM CAPABILITIES**
DIPLEXERSCHALTUNG/SCHALTKREIS MIT MODEMFUNKTION
CIRCUIT DIPLEXEUR/COMMUTATEUR A CAPACITE DE MODEM

(30) Priority: 19.06.2001 US 885580
(43) Date of publication of application: 24.03.2004
(73) Proprietor: Stratos Wireless, Inc., St. John's NF A1C 2G1 (CA)
(72) Inventor: ABUTALEB, Mohammed, Gomma, Potomac, MD 20854 (US); JACOBSON, Jeffrey, Richard, Bethesda, MD 20814 (US); MCCONNELL, Danny, Edward, McLean, VI 22102 (US); CRICHTON, James, C., Derwood, MD 20855 (US); STEPHENSON, Glenn, III, Potomac, MD 20854 (US)
(74) Representative: Leeming, John Gerard
(86) International application number: PCT/US2001/049145
(87) International publication number: WO 2002/103930

(56) References cited:
- WO-A-01/99310
- WO-A-96/31040
- WO-A-98/15105
- US-B1- 6 205 522

## Description

**BACKGROUND OF THE INVENTION**

**Field of the Invention**

The Diplexer/Switch invention is used to enable a standard remote terminal with a multiplexed antenna feed line to use an alternate, enhanced radio frequency ("RF") or intermediate frequency ("IF") modem, thereby providing an improved means of digital microwave communications, particularly microwave communications using satellite transponder capacity leased on a "power/bandwidth" basis. The Diplexer/Switch invention switches connectivity to an RF terminal between a standard modem and an enhanced modem. An "enhanced modem" can deliver higher data rates, or greater data rate flexibility, in a given bandwidth slot by using advanced forward error correction and, optionally, other technologies. The Diplexer/Switch invention has particular utility in enabling the provision of higher data rates using a given RF bandwidth under transponder capacity leases of International Marine Satellite Organization ("Inmarsat") "B service" satellites compared with the data rates of existing Inmarsat-B High Speed Data ("HSD") capable satellite terminals.

Inmarsat leases transponder capacity on its "lease satellites", which are in different orbital locations from its "operational" ("dialup" or "on demand") satellites. A mobile earth station ("MES") terminal typically comprises an MES control unit ("MCU"), an RF terminal, and an RF cable (antenna feed line) between the MCU and RF terminal. A standard MES that operates in lease mode must be capable of immediately reverting to dialup operation, e.g., to transmit a distress call A land earth station operator ("LESO") purchases the rights to use ("leases") full-period, power/bandwidth "slots" with specific frequency boundaries on Inmarsat satellite transponders and subleases specified amounts of power and bandwidth to LESO customers. These power/bandwidth leases are collectively called "leases" herein. A slot leased on a power/bandwidth basis typically incurs charges computed based on the satellite RF transmission power and/or the transponder bandwidth used.

Remote terminals compliant with Inmarsat A, B, M4, and F specifications installed on vehicles, vessels, or aircraft (each, an MES) and similarly compliant fixed remote terminals operating in leased mode can generally support a standard data rate of no more than 16 kbps in each 25 kHz slot of leased bandwidth. An Inmarsat-approved MES is called a "standard MES". There are over ten thousand standard MESs that use a multiplexed antenna feed line and that are installed on vehicles, vessels, or aircraft. To gain the advantages of enhanced modems requires a means of switching between standard and enhanced modems, and that means of switching must easily retrofit thousands of installed MESs. There is unmet market demand for a means of switching between standard and enhanced modems and of remaining in compliance with the rules and policies of the system operator, e.g., Inmarsat, the LESO, or other bandwidth lessor (collectively, "lessor") when the enhanced modem is in use.

**Description of Related Art**

A two-piece RF communications remote terminal typically comprises an "indoor electronics unit" and an outdoor "RF terminal". In some remote terminals, the modem is part of the indoor electronics unit and operates at an intermediate frequency ("IF") between 50 MHz and 300 MHz; an antenna feed line interconnects the modem with the RF terminal in which the primary active components are up- and downconverters, a low noise receive amplifier, a high power transmit amplifier, and associated circuitry. In other terminals, such as those used in Inmarsat B service ("Inmarsat-B"), the modem and up- and downconverters are part of the indoor electronics unit, and an antenna feed line interconnects the modem and RF terminal at RF operating frequencies rather than IF frequencies; the primary active components in the RF terminal are a high power amplifier, low noise receiver, and associated circuitry.

Inmarsat MES terminals use a frequency band of approximately 1626.5 to 1646.5 MHz for uplink and a frequency band of approximately 1525.0 to 1545.0 MHz for downlink. An MCU corresponds to the "indoor electronics unit" of a two-piece RF communications remote terminal. The principal components of an MCU include a single carrier per channel ("SCPC") satellite modem ("standard modem"), an embedded microcontroller, telephone handset, voice codec, serial data input/output ("DTE I/O") port, and standard management and control ("M&C") software. An external power supply provides DC power to the MCU. The principal components of the RF terminal ("RFT") are an antenna, an optional antenna positioner, a Low Noise Amplifier ("LNA") and a high power amplifier ("HPA"). User inputs to the MCU are through a telephone handset or a serial data port. Output from the satellite modem in the MCU is an L-band RF transmit carrier that is then multiplexed with M&C carriers and DC power. The "standard M&C channel" controls the HPA and the optional antenna positioner; the DC powers the HPA and the optional antenna positioner. The satellite modem transmitter output, fed through the antenna feed line, drives the HPA, and the HPA drives the antenna RF elements. Signals received at the antenna RF elements are fed from the antenna through the LNA and diplexed onto the antenna feed line (the same cable that carries the L-band RF transmit carrier, M&C and DC power to the RF terminal) to the receiver of the satellite modem. In a ship-borne MES (also known as a "maritime MES" or "marine MES"), the MCU is known as below decks equipment ("BDE") and the RF terminal is known as above decks equipment ("ADE"). An airborne MES is also known as an "aero MES", and a-land-based MES is also known as a "fixed MES" or "land mobile MES" or "transportable MES".

The term "path" means a route over which communications is provided by electromagnetic means, provided, however, baseband paths may alternatively use optical means. A "traffic path" is a path over which user payload or traffic is carried. A "control path" is a path over which M&C messages are carried. The term "channel" means a method of exchanging messages between two devices using a common path and implies that the path may be shared with other types of messages or user traffic. The term "channel", where noted, also includes delivery by means other than data communications networks, such as mail, fax, telex, telegram, oral, etc. The term "user" means an end user, such as a customer of a LESO, as opposed to personnel operating equipment at a land earth station ("LES"). "On-line" means an earth station is actively transmitting a carrier over a traffic path. "Off-line" means an earth station is not actively transmitting a carrier over a traffic path. "Local" means a function or device associated with an end-user's site, e.g., a remote terminal. "Local" is contrasted with activities associated with a site not operated by an end-user, such as an LES.

The standard information technology associated with an Inmarsat-B LES includes computers and software that allocate uplink and downlink frequencies based on call requests, users' contract rights, bandwidth availability, etc., as provided for in Inmarsat specifications for Inmarsat-B operations. The Inmarsat-B management system includes a Network Coordination Station ("NCS") for each ocean region and Access Control and Signaling Equipment ("ACSE") at each LES and NCS. Each ACSE in an ocean region has network connectivity with the NCS for that ocean region, and exchanges standard M&C messages with the NCS to support Inmarsat-B MES users served by a given LES. For operational satellites, the ACSE at the NCS manages bandwidth by assigning RF slots for each call request.

For lease satellites, a LESO uses an LES ACSE to manage bandwidth within the transponder spectrum leased by that LESO. Standard lease mode use of a lease satellite begins with a call request from an MES to the LES ACSE. The LES ACSE replies to the MES with frequency assignments for the requested lease mode. When a "standard lease mode call" becomes active, the LES ACSE and the MES M&C functions communicate via a standard M&C in-band channel until the call is dropped (torn down) or until the expiration of the lease term.

The standard modem contained in a standard MES monitors a 6 kbps time division multiplexed ("TDM") channel when not transmitting ("idle" or off-line) to listen to the NCS ASCE (for dial-up service on operational satellites) or LES ASCE (NCS failure or during lease services on lease satellites) for instructions. When on-line, the standard modem multiplexes (in the uplink) and demultiplexes (from the downlink) an in-band signaling channel in the SCPC carrier to support signaling and supervision messages to and from the LES ACSE. Counterparts of the equipment and functions described for an MES, adapted for the LES environment, are used at each LES to establish a traffic path between an LES and an MES. The LES is sometimes called a coastal earth station ("CES"). A CES or LES providing leased services is called a "lease gateway".

HSD (64 kbps) service is the only standard Inmarsat lease mode ("Standard Services in lease mode"). To enter lease mode, an Inmarsat-B MES monitors a "bulletin board channel" on an operational satellite to learn the frequency of "Coastal Earth Station stand Alone Lease" ("CESAL") TDM carriers on each Inmarsat "lease satellite". Based on the data received in the bulletin board channel and configuration information provided by the user that specifies the lease satellite and the lease gateway, the MCU in maritime and aero MESs repositions the antenna to point at the specified lease satellite (the user of most land mobile MESs must manually reposition the MES antenna), and tunes the MCU receiver to the CESAL carrier. If the MCU receives the appropriate message on the CESAL carrier, it will configure the modem and other electronics for leased mode operation. All standard Inmarsat-B services (dial-up and lease) use the same call set-up procedure. In standard lease mode, the MES uses call request procedures similar to those available on operational satellites, however, carrier assignment is provided by the specified lease gateway operating independently, rather than by an Inmarsat NCS. After receiving the selected CESAL carrier and entering lease mode, the user establishes a call via various methods available to a given MES, and upon receiving a carrier assignment via signalling carriers from the LES ACSE, the MCU switches to data mode and turns on the MES HPA. To stay in leased mode, the MCU must constantly receive the correct CESAL carrier. If the MCU does not receive the correct CESAL carrier, or if user reconfigures the terminal to exit lease mode, the MCU turns off the HPA. More detail on the procedures and specifications for Inmarsat services and equipment, including Inmarsat-B MES and LES specifications, is available from Inmarsat, 99 City Road, London, England (www.inmarsat.org). Standard M&C signal paths are "in band", that is, standard M&C messages share the path that is also used by payload traffic between an MES and an LES. It is possible to use non-standard peripheral equipment at a lease gateway and at an MES served by the lease gateway to provide a non-standard service if such peripheral equipment can be correctly configured and managed through an M&C channel external to standard control signal paths. "Standard Services in dial-up mode" are voice, fax, and low speed data. Standard Services in dial-up mode and Standard Services in lease mode are collectively called, "Standard Services". Services provided using an enhanced modem with an MES (and a counterpart enhanced modem at the LES sharing a traffic path with the MES) are called "Enhanced Services", and when an MES is on-line using an enhanced modem it is said to be in "Enhanced Services mode".

Leased bandwidth on Inmarsat satellites is very expensive, and standard data rates are slow. Several types of standard Inmarsat MESs, in particular, Inmarsat-B MESs, use relatively inefficient fixed rate forward error correction ("FEC") to encode and decode bitstreams for transmission in a widely diverse environment. An Inmarsat-B standard MES in lease mode provides a throughput of 64 kbps in 100 kHz of leased bandwidth. Higher data rates for a given bandwidth have been long sought. Although there is certainly demand for higher data rates, several substantial problems have hindered improvements, as follows:

--- Earth stations (both LES and MES) must have the ability to handle standard dial-up calling as well as leased services. Many ships only have a single MES, which must be available on short notice for emergency calls. If an LES channel unit or MES could provide higher data rates than are possible with Standard Services in lease mode, the LES channel unit or MES must be responsive to commands to revert from "enhanced leased operation" to Standard Services mode on short notice.

**--**- There are over 10,000 MESs currently installed on ships. For commercial success, a method of enhanced lease operation must be a retrofit of only the below decks equipment of an installed MES. A retrofit must not disturb those parts of an MES, such as the standard modem and the HPA, that have received Inmarsat certification as compliant with Inmarsat standards ("type approval"). Retrofitting presents significant problems in how to switch between two modems, yet ensure that the MCU receiver constantly receives CESAL carrier during Enhanced Services mode.

--- Standard services drive the HPA with characteristic waveforms that are monitored by the MCU. Any combination of modulation methods, forward error correction, and data compression used to obtain higher data rates must result in a waveform that is compatible with the standard HPA included as part of a type approved Inmarsat terminal. For instance, many Inmarsat-B MCUs drive the HPA with a constant envelope waveform to provide Standard Services in lease mode. To avoid conditions that would cause such Inmarsat-B MCUs to turn off the HPA, enhanced lease operations must also drive the HPA with a constant envelope waveform. One solution of the problem of compatible waveforms is provided in the commonly assigned U.S. patent application, serial number 09/885,580, filed on 19 June 2001, in the U.S. Patent and Trademark Office, for an invention entitled "Inmarsat Capacity Expansion System and Method".

--- To coordinate the use of standard and higher speed transmission paths among standard and retrofitted earth stations in a given network, a management system is required. For operational flexibility and efficiency, the means of diplexing and switching should interface and operate with a variety of management and control systems that switch between use of the standard modem and an enhanced modem, i.e., M&C systems that insert or remove the enhanced modem from the transmission path, and when the enhanced modem is removed from the transmission path, the standard modem is inserted in the transmission path and the MES can provide Standard Services. For utmost simplicity, and highest risk of interference with other satellite users, the control system can be a manual switch and manual configuration of the enhanced modem. For lowest risk of interference with other satellite users, the control system should enter Enhanced Services mode under exclusive, remote control of the LESO or by entry of coded commands that are validated by a local processor associated with the diplexing and switching components required to switch between the standard terminal modem and the enhanced modem. In Inmarsat B and similar services, a receive path from the low noise receiver to the standard terminal modem must be maintained independent of RF remote terminal operational mode to enable continuous monitoring by the standard terminal of the CESAL carrier. Monitoring of the CESAL carrier and CESAL messages greatly reduces the possibility of radiating RF energy incorrectly, e.g., transmitting to an incorrect satellite. More advanced control systems include various levels of validation of configuration data that is input by local users.

--- A standalone M&C system that does not require a real-time, interactive connection between and MES and a network management computer is very desirable. An MES in lease mode often stays in lease mode for the full period of the lease, which can be for years. Real-time, interactive management of switching and configuration, i.e., a full-period M&C channel, would needlessly consume precious bandwidth during long periods when no management is needed, and require a second real-time authorization and management network (in addition to the authorization and management network for Standard Services). If, however, an MES is used alternately for dynamic or reconfigurable lease services where capacity is allocated based on demand, then a real-time, interactive M&C, similar to that described in commonly assigned U.S. patent applications 09/252,087, filed 18 February 1999 claiming benefit of an earliest priority date of 23 January 1998, and entitled "System and Method for Facilitating Component Management in a Multiple Vendor Satellite Communications Network", would be helpful. The diplexing and switching means should therefore have interfaces for a range of M&C systems.

There have been unpublished efforts using peripheral equipment interfaced to an Inmarsat-B MES to solve the preceding problems and to achieve higher data rates. The results of these efforts to date, however, are systems that require a dedicated local personal computer ("PC") as a site controller, real-time M&C channels between an MES and the LES, and transmission from the LES over the real-time M&C channels of all configuration commands and parameters (e.g., start time/stop time, ocean region configurations, and power level vs. data rate settings). These systems are problematic in that they may provide unlimited local user control of critical modem parameters.

The common element in the solution to the preceding problems is a means of diplexing and switching with interfaces for a range of M&C systems. The Diplexer/Switch invention not only provides this missing element in the context of Inmarsat, but can be used to obtain higher or more flexible data rates in other types of microwave transmission networks that use a multiplexed antenna feed line.

### SUMMARY OF THE INVENTION

The Diplexer/Switch invention as used with remote terminals having multiplexed antenna feed lines, switches connectivity to an RF terminal between an enhanced modem and a standard modem (which is typically part of an indoor electronics unit), and does so while enabling compliance with operational parameters imposed by the lessor of a satellite transponder or other RF spectrum. Such operational parameters, in the case of Inmarsat-B service, require that the standard modem be immediately available if needed for emergency calls or if certain HPA conditions are not satisfied. Enhanced modems are available with configurable FEC (e. g., Turbo FEC), concatenated Reed-Solomon error correction, and/or selectable modulation methods (e. g., QPSK, 16-QAM,64-QAM) that provide higher or more flexible data rate configuration options than do the standard modems included with the indoor electronics unit of standard terminals. The Diplexer/Switch invention comprises two diplexers, two switches, support devices such as splitters and filters, RF signal paths, optional upconverters and downconverters, and one or more management and control interfaces and associated control paths. When connectivity to the RF terminal is switched to the enhanced modem, the Diplexer/Switch invention inserts the enhanced modem as the signal source of the transmit path to the RF terminal, provides a zero-loss path between the RF terminal and the multiplexed port of the indoor electronics (such as an MCU) for DC power and antenna control, provides a received signal to the receive port of the enhanced modem, and in applications where it is needed, provides a received signal to the multiplexed port of the standard indoor electronics.

According to the present invention, there is provided a means for enabling a standard, modem-equipped Inmarsat-B mobile earth station control unit (MCU) and an alternate RF modem with an L-band interface to transmit using a single standard Inmarsat-B RF terminal on a mutually exclusive basis by the use of a diplexing means and by at least two RF switches controlled by a control means selected from the group comprising a manual switch on an assembly containing the diplexing means and RF switches, an external computer and multiconductor interface to an assembly containing the diplexing means and RF switches, and an embedded computer mounted on an assembly containing the diplexing means and RF switches, whereby the transmit source feeding the RF terminal is switched between the MCU and the alternate RF modem by the setting of the RF switches and wherein the MCU and alternate RF modem can receive from the RF terminal regardless of which transmit source is connected to the RF terminal.

The primary objects of the invention are to provide: a receive path to the standard modem at all times; a simple, cost-effective, and easily installed retrofit package; rapid restoration of Standard Services mode; a range of M & C interfaces; and avoidance of the need to obtain"type approval"of the device from a regulatory body or lessor. Satellite communications using Inmarsat services and MESs are used to illustrate various embodiments of the Diplexer/Switch invention, but the Diplexer/Switch invention is equally applicable to other RF communications services that use a multiplexed antenna feed line between the indoor electronics unit and the RF terminal.

The indoor electronics units of marine and aero remote terminals typically include an antenna controller that controls the positioning of the associated outdoor antenna through messages sent over the antenna feed line to an antenna positioner. In the indoor electronics unit, the DC power for the HPA (and antenna positioner, if any), the control messages from the antenna controller (if any), the output of the transmitter in the standard modem, and the output from the low noise receiver in the RF terminal are all frequency multiplexed over the antenna feed line and appear at the multiplexed port of the indoor electronics unit. The Diplexer/Switch is inserted in the antenna feed line, typically near the indoor electronics unit. The "Standard Services port" of the Diplexer/Switch interfaces, usually through a connectorized cable, to the multiplexed port of the indoor electronics unit. The "Enhanced Services" transmit and receive ports of the Diplexer/Switch interfaces, usually through one or more connectorized cables, to the transmit and receive ports of the enhanced modem. A first diplexer in the Diplexer/Switch invention terminates the transmit/receive signal path from the Standard Services port when the Diplexer/Switch is in Enhanced Services mode; the transmit signal is demultiplexed and sunk in a dummy load. The receive signal from the RF terminal is provided through the diplexer to the receive path in the Standard Services port in applications where the receiver in the standard modem must constantly monitor certain administrative frequencies during Enhanced Services mode. During Enhanced Services mode, the enhanced modem transmitter output and receiver input path are multiplexed through a second diplexer and appear as a multiplexed signal at the Diplexer/Switch output port. The Diplexer/Switch output port provides an interface to the antenna feed line that terminates at the RF terminal. Zero-loss paths for antenna controller messages and for DC power are provided from the Standard Services port directly to the Diplexer/Switch output port. The antenna controller messages and DC power are combined with the multiplexed transmit and receive paths at or near the Diplexer/Switch output port. Dividers, filters, potentiometers, and directional couplers are used in the Diplexer/Switch to maintain zero-loss paths through the Diplexer/Switch during Enhanced Services mode compared with Standard Services mode, and to separate the antenna controller messages and DC power from the transmit and receive bands.

The signal path through the Diplexer/Switch in Standard Services mode is called the "bypass path", since it bypasses the enhanced modem and provides a zero-loss, DC to operating frequency connection between the indoor electronics unit and the RF terminal. The signal path through the Diplexer/Switch in Enhanced Services mode is called the "enhanced path". Switching between the bypass path and the enhanced path is effected through an entry switch associated with the Standard Services port, and an exit switch associated with the Diplexer/Switch output port. The entry switch and exit switch are always thrown in unison. The enhanced modem remains connected to the second diplexer during both Standard Services mode and Enhanced Services mode. A Diplexer/Switch enables an indoor electronics unit to transmit and receive in either Standard Services or Enhanced Services mode, but not both modes, at a given time.

Different embodiments of the Diplexer/Switch support different methods of management and control of the entry switch and exit switch, i.e., of switching between Standard Services mode and Enhanced Services mode. In the most basic embodiment the invention, the M&C interface is a manual switch that toggles the entry switch and exit switch between the bypass path and the enhanced path. The Diplexer/Switch is normally a printed circuit board assembly, hereafter called the "Diplexer/Switch Board."

A second embodiment of the Diplexer/Switch includes solid state or manual relays as input and exit switches, with control leads for the relays appearing at a multiconductor interface on the Diplexer/Switch Board. External control devices, such as a timer or computer, can be connected to the multiconductor interface and used to energize the relays for switching between Standard Services mode and Enhanced Services mode.

A third embodiment of the Diplexer/Switch includes a computer (processor or microcontroller, memory, and associated data and control paths) on the Diplexer/Switch Board. The data paths normally include a data interface, typically a serial data interface. The onboard processor or microcontroller controls the input and exit switches using the control paths between the processor and the switches. The data interface enables the processor to query an indoor electronics unit that also has a data interface to coordinate switching between Standard Services mode and Enhanced Services mode based on specified parameters, e.g., entry into Enhanced Services mode is permitted only if Standard Services are idle (off-line), the HPA being ready, and the antenna is properly positioned. The data interface also permits the processor to accept configuration inputs, either locally through a numeric keypad or other input device, or through a local or wide area M&C network, and to configure the enhanced modem. Important configuration inputs include start and stop times, operating frequencies, and power levels.

The Diplexer/Switch M&C software ("Diplexer/Switch M&C Software") running on the processor, the processor itself, and the peripheral electronics and devices associated with the processor, in the third embodiment can be rudimentary or sophisticated. For instance, in a sophisticated embodiment, the processor can be a digital signal processor ("DSP") running a real-time operating system, and configuration data can be stored in non-volatile random access memory ("NVRAM") memory associated with the DSP. The real-time operating system can support a variety of input devices and displays, encryption methods, network protocols, lessor applications, and user applications.

The Diplexer/Switch Board can also include upconverters and downconverters that are used if the enhanced modem operates in a different RF band than the leased slot band. For example, an enhanced modem may operate in a 70 MHz - 140 MHz IF band, and the leased slot may be L-band (e.g., Inmarsat-B). A Diplexer/Switch embodiment for this application would include an IF to L-band upconverter for the transmit path from the enhanced modem, and an L-band to IF downconverter for the receive path to the enhanced modem. A pair of Diplexer/Switch-enabled RF communications remote terminals can be equipped with computer-controlled switching that selects the terminal with better received signal quality, thereby providing redundancy and fail-over based on received signal quality.

**BRIEF DESCRIPTION OF THE DRAWINGS**

FIG. 1 illustrates a standard mobile earth station.

FIG. 2 illustrates a manually switch embodiment of the Diplexer/Switch Board, in Standard Services mode.

FIG. 3 illustrates manually switch embodiment of the Diplexer/Switch Board in Enhanced Services mode.

FIG. 4 illustrates a relay interface embodiment of the Diplexer/Switch Board, in Standard Services mode.

FIG. 5 illustrates a relay interface embodiment of the Diplexer/Switch Board, in Enhanced Services mode.

FIG. 6 illustrates an embedded processor embodiment of the Diplexer/Switch Board, in Standard Services mode.

FIG. 7 illustrates a embedded processor embodiment of the Diplexer/Switch Board, in Enhanced Services mode.

FIG. 8 illustrates a state table for acquisition of the RFT by computer-equipped embodiments of the Diplexer/Switch Board.

FIG. 9 illustrates the messages exchange used to enter Enhanced Services mode.

FIG. 10 illustrates paths, channels, and messages used by the network management system and Enabled Terminals.

FIG. 11 illustrates Enhanced Channel Units at an LES and an M&C path from the Enhanced Channel Units to the network management system.

FIG. 12 illustrates a redundant pair of Enabled Terminals and a means of feeding and selecting the active Enabled Terminal.

FIG. 13 illustrates embodiments of the Diplexer/Switch invention that use up- and downconverters to match an enhanced modem to a given RF operating band.

**DETAILED DESCRIPTION OF THE PREFERRED EMBODIMENTS**

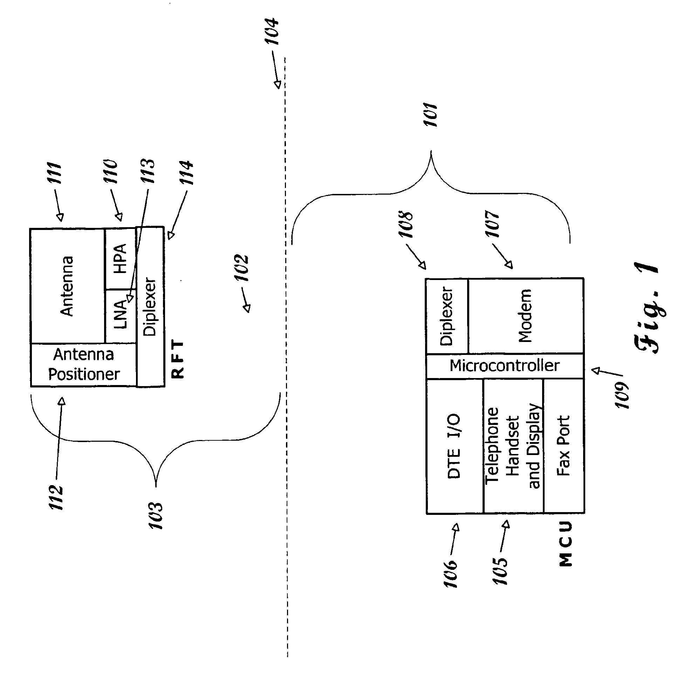

As shown in FIG. 1, a standard RF remote communications terminal with multiplexed antenna feed line comprises an indoor electronics unit, an antenna feed line, and an RF terminal ("RFT"). FIG. 1 illustrates a maritime MES, specifically, an Inmarsat-B MES. The Inmarsat-B MES indoor electronics unit is also called "below decks equipment" (101), or "BDE", and comprises an MCU and a portion of the antenna feed line (102). The RFT and the remaining portion of the antenna feed line (102) are called "above decks equipment" (103) or "ADE". In a fixed MES, the ADE is also called "outdoor equipment". The demarcation (104) between BDE and ADE (or between indoor electronics and outdoor equipment) is the penetration through a deck or wall that separates interior space from exterior space. The MCU principally comprises: a telephone handset (105); baseband signal inputs and outputs, particularly serial data (106); an SCPC modem (107) L-band output; a diplexer (108), and an embedded microcontroller (109) running an operating system and a management software application. The standard M&C software running on the microcontroller of an MCU is sometimes called herein the "MES management program". The RFT for a maritime MES principally comprises an HPA (110), antenna (111), antenna positioner (112), LNA (113) and diplexer (114). The MCU is connected to the RFT by an RF cable, the antenna feed line (102). The L-band transmit and receive signals, and standard M&C channel are multiplexed by frequency above the DC power on the RF cable. The Inmarsat-B hardware, software, and operating specifications for Standard Services, including the instruction and data sets of the embedded microcontroller in a standard Inmarsat-B MCU, are available from Inmarsat (www.inmarsat.org). When on-line over an operational satellite, an Inmarsat-B MES multiplexes an in-band signalling channel onto the SCPC carrier to provide continual communication to the LES of Inmarsat "Signalling Unit" messages, such as "connected/busy".

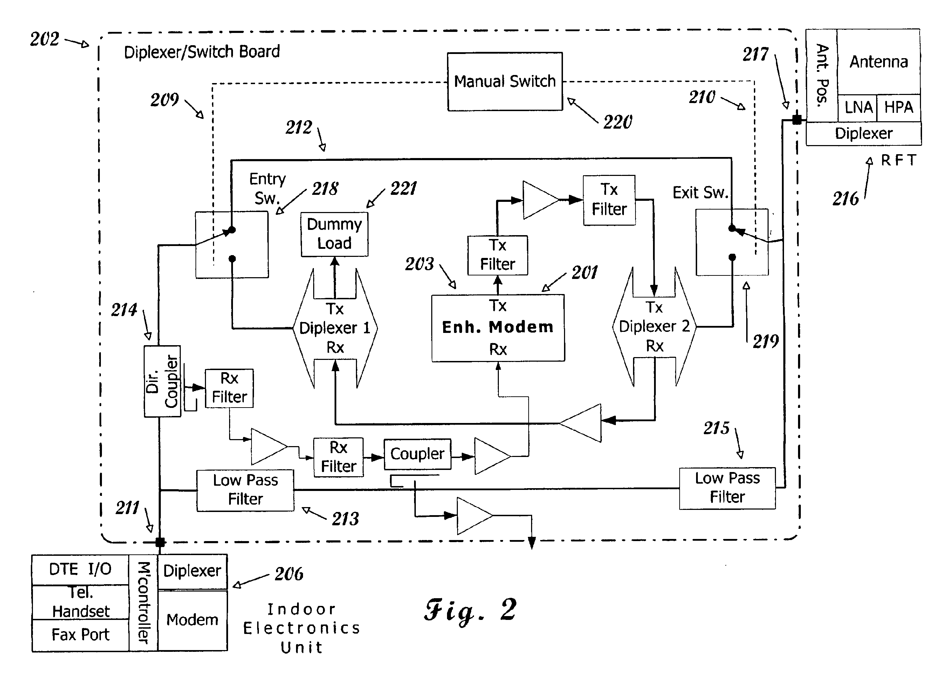

As shown in FIG. 2, a basic, first embodiment of the Diplexer/Switch used to retrofit an RF communications remote terminal supplements standard equipment with a second SCPC modem (i.e., an enhanced modem (201), also called an "alternate RF modem", or "alternate IF modem", since what is RF when a modem is used for one operating band may be IF when a modem is used with upconverters and downconverters), a Diplexer/Switch Board (202), control signals and paths, and a manual switch (220) for management and control. The multiplexed output of the indoor electronics unit (206) is connected to the entry connector (211) on the Diplexer/Switch Board (202), and the antenna feed line and RFT is connected to the exit connector (217) on the Diplexer/Switch Board (202). The RF path between the indoor electronics unit (206) and the entry connector (211) normally is short, effectively making the Diplexer/Switch Board part of the indoor electronics. RF paths on the Diplexer/Switch Board in FIG. 2 are at the operating frequencies of the standard modem in the indoor electronics unit (206). Standard Services baseband equipment (e.g., telephone, fax, serial data paths) is connected to the baseband ports of the indoor electronics unit. During periods in which the indoor electronics unit is on-line providing Standard Services (Standard Services mode), the indoor electronics unit (206) transmit/receive channels, DC power to the RF terminal, and the standard M&C channel pass through two connectors (an entry connector (211) and an exit connector (217)), two switches (an entry switch (218) and an exit switch (219)) and a path (212) interconnecting the switches on the Diplexer/Switch Board ("bypass path"). In Standard Services mode, the active components of the Diplexer/Switch Board are bypassed and the traffic path interfaces directly with the RFT.

On the Diplexer/Switch Board, between the entry connector (211) and the entry switch (218), the multiplexed transmission path from the indoor electronics unit is tapped by a low pass filter (213) and RF (or IF) operating frequency signals continue through a directional coupler (214), but not through the low pass filter (213). The standard M&C channel and DC power, but not the L-band transmit and receive signals, pass through the low-pass filter (213), a second low pass filter (215), and connect to a combining point described below that is on or near the exit connector (217).

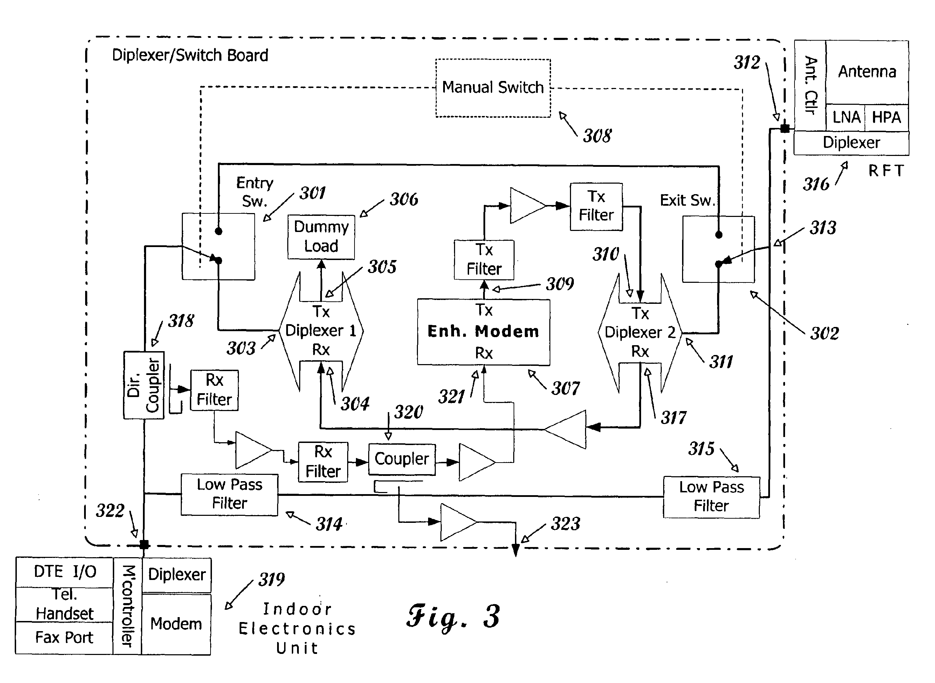

The manual switch (220) switches the entry switch (218) and exit switch (219) between Standard Services mode (using the bypass path), as shown in FIG. 2, and Enhanced Services mode (using the enhanced path), as shown in FIG. 3. The manual switch (220) can be mechanical and be mechanically coupled to the entry switch (218) and the exit switch (219), or the manual switch can be solid state electronics and control the entry switch and exit switch electronically. The entry and exit switches can be mechanical, relays, or solid-state electronics. Normally, the manual switch (220) would be mechanical contact closure, and the entry and exit switches would be relays. The manually switched, basic embodiment of the Diplexer/Switch shown in FIGS. 2 and 3 relies upon a local user to manually confirm that engineering, geolocational, and contractual conditions required to enter Enhanced Services mode are satisfied before switching from the bypass path to the enhanced path. There are no automated confirmations of the satisfaction of engineering, geolocational, and contractual conditions, and therefore, therefore, Enhanced Services mode could be accidentally entered during an active Standard Services call. There are many other risks associated with such manual operation, e.g., entering Enhanced Services mode when the HPA is unavailable, when the antenna is pointing toward an incorrect satellite, or when the enhanced modem is incorrectly configured. To minimize the risk of interference to other users of leased RF spectrum on a shared facility, such as a leased satellite transponder, it is unlikely that the manually switched, basic embodiment of the Diplexer/Switch shown in FIGS. 2 and 3 would be permitted by the lessor. Nevertheless, if a local user were highly trained and if the local user's organization controlled the entire RF communications facility, e.g., a terrestrial microwave system, a manually switched, basic embodiment of the Diplexer/Switch might be permitted by the lessor.

As shown in FIG. 3, when manual switch (308) is thrown to switch the entry switch (322) and exit switch (312) on the Diplexer/Switch Board from the bypass path to the enhanced path, the enhanced modem (307) and other active components on the Diplexer/Switch Board are inserted into the RF path to the RFT; using the enhanced path permits entry into Enhanced Services mode, and prevents concurrent use of Standard Services Mode. In Enhanced Services mode, the entry switch (322) on the Diplexer/Switch Board connects the multiplexed output of the indoor electronics unit (319) to the diplexed port (303) of a first diplexer in the Diplexer/Switch Board. The first diplexer separates the receive and transmit paths and connects them to receive (304) and transmit (305) ports, respectively, of the first diplexer. At the transmit port of the first diplexer, the standard transmit path from the transmit output of the standard modem in the indoor electronics unit (319) is terminated in a dummy load (306). The diplexer/switch performs two primary functions. The first function is to accept the downlink signal from the RFT and provide the received L-band signal to the receive input of the standard modem in the indoor electronics unit (319) and to the receive input of the enhanced modem (307). The second function performed by the Diplexer/Switch is to select the desired uplink RF source, either the standard modem in the indoor electronics unit (319) or the enhanced modem (307), and feed it to the RFT. In Enhanced Services mode, the entry and exit switches on the Diplexer/Switch Board are thrown to insert the enhanced modem (307) and other active components on the Diplexer/Switch Board into the RF path to the RFT. In Enhanced Services mode, the enhanced modem transmit path (309) is connected to the transmit port (310) of a second diplexer. The diplexed port (311) of the second diplexer is connected through the exit switch (302) to the exit connector (312). Between the exit switch (302) and the exit connector (312) at a combining point (typically, a "T" connection on the exit connector side of the exit switch (313) or on the exit switch itself), the diplexed transmit and receive path from the diplexed port (311) of the second diplexer are combined with the standard M&C channel and DC power that pass through the first and second low pass filters (314, 315). The multiplexed path continues from the combining point through the exit connector (312) on the Diplexer/Switch Board, via the RF cable, to the RFT (316). Because the standard M&C channel and DC power for the HPA and antenna positioner (if any) pass undisturbed through the Diplexer/Switch Board, the indoor electronics unit can control the HPA and antenna during both Standard Services mode and Enhanced Services mode.

During Enhanced Services mode, from the exit connector (312) on the Diplexer/Switch Board, the receive path follows the traffic path through the exit switch (302) to the diplexed port (311) of the second diplexer and appears at the receive port (317) of the second diplexer. The receive path is then amplified and feeds the receive port (304) of the first diplexer, which diplexes the receive channel into the traffic path that runs through the entry switch (301) and the directional coupler (318) to the indoor electronics unit (319). The directional coupler (318) between the entry connector and the entry switch on the Diplexer/Switch Board provides a branch of the receive path from the antenna. From the directional coupler (318), the branch receive path is amplified, filtered, passes through a second coupler (320), is amplified again, and then feeds the receive port (321) of the enhanced modem. By feeding the receive port of the enhanced modem from a directional coupler (318) between the entry connector (322) and the entry switch (301) on the Diplexer/Switch Board, the receiver in the enhanced modem obtains a received signal independent of the position of the entry and exit switches. The tapped output of the second coupler (320) in the branch receive path is amplified and provided to an optional receive monitor connector (323) on the Diplexer/Switch Board.

In summary, when connectivity to the RFT is switched to the enhanced path, the Diplexer/Switch invention inserts the enhanced modem as the signal source of the transmit path to the RF terminal, provides a zero-loss path between the RF terminal and the multiplexed port of the indoor electronics unit (such as an MCU) for DC power and antenna control, provides a received signal to the receive port of the enhanced modem, and in applications where it is needed, provides a received signal to the multiplexed port of the standard indoor electronics. When the Diplexer/Switch is switched to the bypass path, the enhanced modem is bypassed, and the indoor electronics unit is connected to the RFT as if the Diplexer/Switch did not exist. The design of the Diplexer/Switch solves several engineering problems that had defied previous solution, particularly the provision of a receive path to the standard modem at all times; a simple, cost-effective, and easily installed retrofit package; rapid restoration of Standard Services mode from Enhanced Services mode; a range of M&C interfaces; and avoidance of the need to obtain "type approval" of the device from a regulatory body or lessor.

It is highly desirable to confirm the satisfaction of engineering, geolocational, and contractual conditions required to enter Enhanced Services mode without relying on the knowledge and skills of a local user. Instead of using a manual switch and a local user's judgment to switch between Standard Services mode and Enhanced Services mode, a computer-controlled, multiconductor interface to the entry and exit switches can be used.

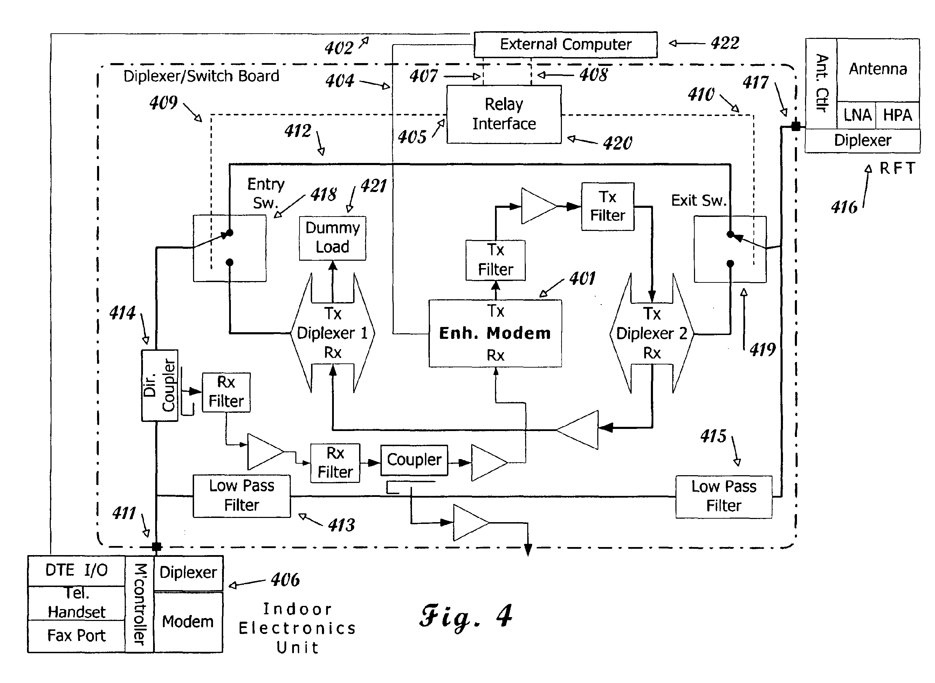

As shown in FIG. 4, in a second embodiment of the Diplexer/Switch invention, a computer-controlled, relay (or other switch control) interface replaces the manual switch of the first embodiment. In this second embodiment, a computer or other data processing capability (422) external to the Diplexer/Switch Board controls logic levels or current supplied through a multiconductor interface (420) (denoted "relay interface" in FIG. 4) to the entry switch (418) and exit switch (419). Entry switch (418) and exit switch (419) may be relays, solid-state switches, or equivalent switching devices actuated by logic levels or current. Normally, relays actuated by current are used in this embodiment, primarily for cost reasons. The internal operation of the second embodiment of the Diplexer/Switch invention is identical to that described above for the manually switched, first embodiment, except the entry switch (418) and exit switch (419) are controlled through the multiconductor interface (420), and the multiconductor interface (420) is in turn controlled by software or firmware running on an external computer (422). Such software or firmware is called the "Diplexer/Switch M&C Software" or "switching management program". Logic levels or current in an electrical interface can be controlled by software by methods well known in the art. The Diplexer/Switch M&C Software confirms the satisfaction of engineering, geolocational, and contractual conditions required to enter Enhanced Services mode before activating Enhanced Services mode. Typical engineering, geolocational, and contractual conditions are that the indoor electronics unit (406) is powered up but not on-line in Standard Services mode (i.e., not engaged in a call), that the HPA is powered up and available, that the CESAL carrier is being received, that the enhanced modem is powered up and configured, and that the antenna is pointing at the correct satellite or other RF communications resource.

To obtain status, and to confirm the satisfaction of conditions, related to the indoor electronics unit, the external computer (422) can use an M&C path (402) from the external computer (422) to the DTE I/O port of the indoor electronics unit (406). The M&C path (402) is typically a serial data channel with RS-232 interfaces. The message dialog between the external computer (422) and the indoor electronics unit (406) is described in more detail below in the description of a third embodiment of the Diplexer/Switch invention in which the external computer is replaced by a computer embedded on the Diplexer/Switch Board. To obtain status, and to confirm the satisfaction of conditions, related to the enhanced modem (401), the external computer (422) can use an M&C path (404) from the external computer (422) to the remote control port of the enhanced modem (401). M&C path (404) is typically a serial data channel with RS-232 interfaces. The message dialog between the external computer (422) and the enhanced modem (401) is described in more detail below in the description of the third embodiment of the Diplexer/Switch invention.

The external computer (422) can operate in standalone mode, i.e., connected at most to the indoor electronics unit, the enhanced modem, and the Diplexer/Switch Board, and without an M&C network connection to a network management system, such as a configuration and authorization facility operated by a lessor. In standalone mode, configuration data (e.g., start and stop times for Enhanced Services mode, enhanced modem operating frequencies, enhanced modem and HPA power levels, satellite location, etc.) and authorizations to use specific RF communications resources must be loaded into the external computer (422) for use by the Diplexer/Switch M&C Software. Alternatively, the external computer (422) can have an M&C network connection (not shown in FIG. 4, but described below in connection with the third embodiment of the Diplexer/Switch) to a network management system. With such a network connection, configuration and authorization information can be delivered to the external computer (422) without the involvement of local users. Operating the external computer (422) with an M&C network connection typically requires an M&C network path separate from the traffic carried in Enhanced Services mode, since the relevant remote terminal may not be in Enhanced Services mode when an M&C message is sent.

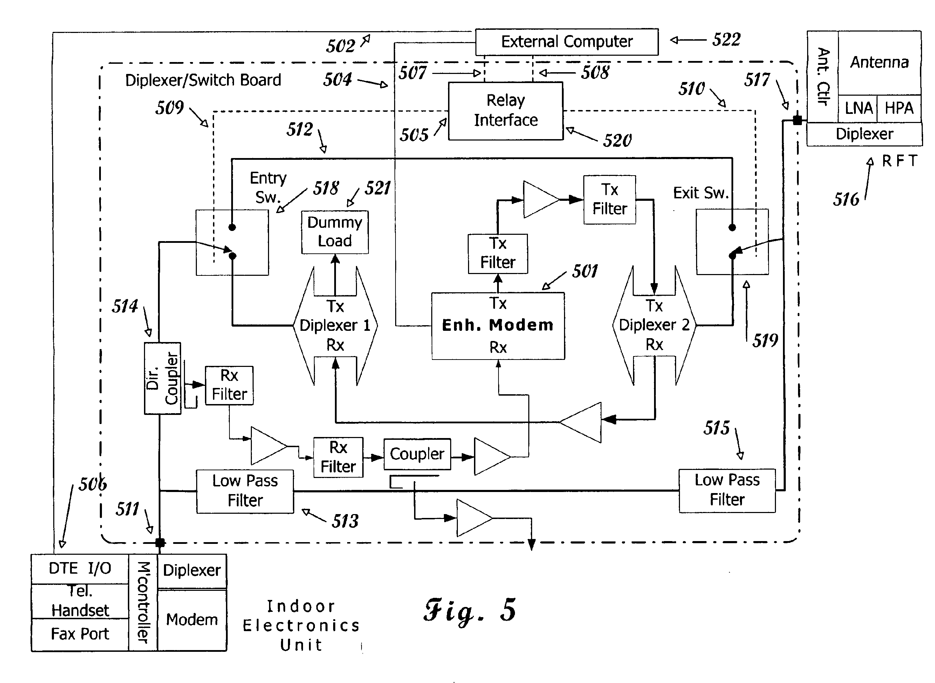

As shown in FIG. 5, when the Diplexer/Switch M&C Software running on the external computer (422) throws entry switch (518) and exit switch (519) to the enhanced path by changing logic levels or current in multiconductor interface (520) (denoted "relay interface" in FIG. 5), the remote terminal enters Enhanced Services mode. Other than the use of the multiconductor interface (520) and external computer (522), the second embodiment operates in Enhanced Services mode, and in switching between Standard Services mode and Enhanced Services Mode, just as the first embodiment described above does.

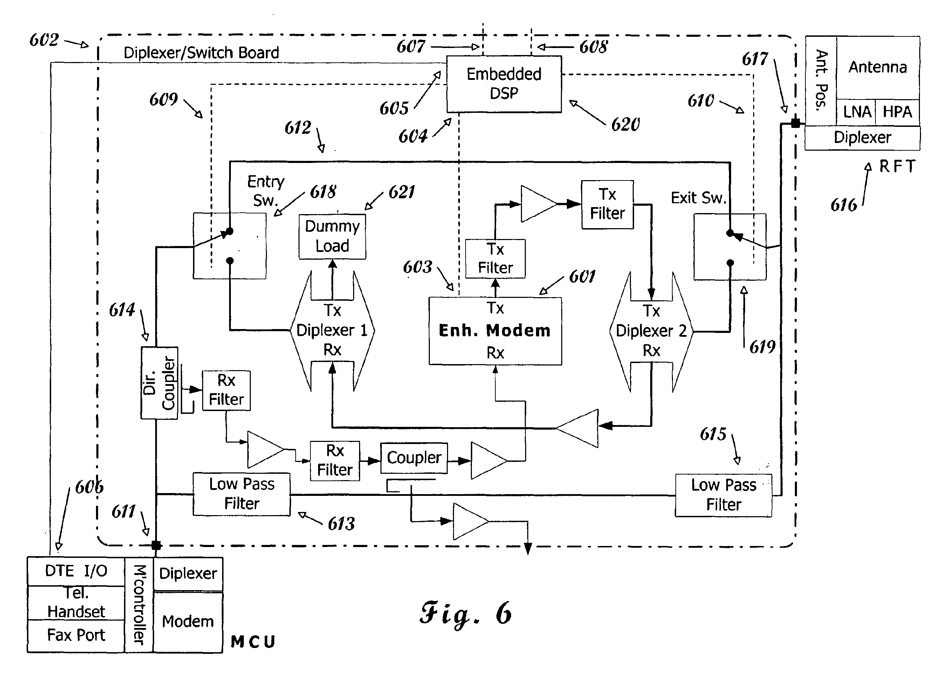

As shown in FIG. 6, the functions performed by the external computer in the second embodiment can be performed by a digital signal processor or other embedded computer (collectively, "Embedded DSP" or "embedded computer") that form part of the Diplexer/Switch Board. In this third embodiment of the Diplexer/Switch Board, the entry switch and exit switch are controlled by Diplexer/Switch M&C Software running on the Embedded DSP. The Diplexer/Switch M&C software running on the DSP, the DSP itself, and the peripheral electronics and devices associated with the DSP can be basic or sophisticated. In a sophisticated embodiment, the Embedded DSP runs a real-time operating system, exchanges messages with a network management system, stores configuration data in non-volatile random access memory ("NVRAM") memory associated with the Embedded DSP, exchanges messages with the MCU, controls the entry and exit switches, controls the enhanced modem and, through commands to the MCU, controls the HPA. The real-time operating system can support a variety of input devices and displays, encryption methods, network protocols, lessor applications, and user applications. Rather than using a separate computer, with its substantial space, power, operator training, and maintenance requirements, using a dedicated DSP embedded on the Diplexer/Switch Board requires minimal space, power, operator training, and maintenance, and minimizes the risk of local user error. When used with enhanced modems that have an electronics cavity, control interface, and DC power for one or more OEM circuit boards, such as the EFData SDM-300L modem described below, the Diplexer/Switch Board with Embedded DSP is mounted entirely within the enhanced modem, further reducing the footprint of the invention, associated cabling, and opportunities for local user error.

The Embedded DSP embodiment of the Diplexer/Switch invention is particularly attractive for use in retrofitting existing RF communications remote terminals, such as Inmarsat-B MESs, with multiplexed antenna feed lines and strict rules regarding RF transmissions. Therefore, an Inmarsat-B MES will be used as the indoor electronics unit and RFT in the description of the third embodiment, and the third embodiment will be described first as a retrofit of an standard Inmarsat-B MES, and then in a version in which the enhanced modem also operates in Standard Services mode as a backup after failure of the standard modem in the MCU. The version of the third embodiment of the Diplexer/Switch invention that retrofits an Inmarsat-B MES is called an "Inmarsat-B Diplexer/Switch Board" or an "Enabled Terminal for Inmarsat-B service". In the preferred embodiment for Inmarsat-B service, entry and exit frequencies on the Diplexer/Switch Board are L-band. All of the M&C functionality described in connection with the Inmarsat-B Diplexer/Switch Board can be implemented in the second embodiment of the Diplexer/Switch Board by using Diplexer/Switch M&C Software designed for the relevant external computer and multiconductor interface. Such M&C functionality can also be implemented for RF communications remote terminals other than an Inmarsat-B MES using either the second or third embodiment of the Diplexer/Switch Board and a version of the Diplexer/Switch M&C Software specific to the network and RF communications environment. A real-time or part-time M&C network provides M&C channels for exchanging M&C messages between the network management system and the Diplexer/Switch M&C Software associated with second and third embodiments of the Diplexer/Switch invention.

Use of the Inmarsat-B Diplexer/Switch Board as part of a managed network requires either a M&C network connection between a network management system and the Embedded DSP (called a "direct M&C network connection") or a means of local entry of configuration data obtained indirectly from the network management system (i.e., by a printout of configuration data) and validation of the entered data by the Diplexer/Switch M&C Software (called an "indirect M&C network connection"). The Diplexer/Switch M&C Software can optionally validate M&C messages received through a direct M&C network connection. In the third embodiment, the Diplexer/Switch Board comprises an Embedded DSP, associated buses, memory (both RAM and NVRAM), support chips, optional mass storage, first and second diplexers, entry and exit switches, support devices such as splitters and filters, and control and RF signal paths. Using M&C messages received directly or indirectly from the network management system, the Embedded DSP controls whether Enhanced Services mode of operation can be activated. Such M&C messages can be freshly received, or retrieved from non-volatile random access memory ("NVRAM") memory associated with the Embedded DSP. The technology of wide area M&C networks, such as one needed to provide a direct M&C network connection, and of network management systems for RF communications remote terminals, is well known in the art.

As shown in FIG. 6, the internal operation of the third embodiment of the Diplexer/Switch invention is identical to that described above for the second embodiment, except the external computer and the multiconductor interface are replaced by the Embedded DSP (620) and associated control lines and data interfaces. In particular, entry switch (618) and exit switch (619) are controlled by the Diplexer/Switch M&C Software running on the Embedded DSP (620).

The M&C port type and I/O driver software used in the Inmarsat-B Diplexer/Switch Board for communications with the MCU, enhanced modem, and M&C network match the external data bus types and data rates with which the Embedded DSP interfaces. The M&C I/O ports on the Inmarsat-B Diplexer/Switch Board are usually EIA-232 async ports, but the M&C I/O port could be a universal serial bus port, EIA-1394, parallel port, or other type of port, depending on the Diplexer/Switch M&C channels used. In Diplexer/Switch embodiments using an EFData SDM-300L ("EFData 300L") as the enhanced modem, the Inmarsat-B Diplexer/Switch Board includes a multi-port Universal Asynchronous Receiver Transmitter ("UART") and UART software driver to provide an M&C channel between the DSP and the enhanced modem. The EFData 300L modem is manufactured by Comtech EFData, 2114 West 7^{th} Street, Tempe, Arizona 85281 (www.efdata.com). For Inmarsat-B service, an enhanced modem could be configured with rate 7/8 Viterbi forward error correction ("FEC") and concatenated Reed-Solomon error correction, or with rate 3/4 Turbo FEC. One such "Turbo FEC" being implemented on programmable modems is published as "Turbo Product Coding" by Efficient Channel Coding, Inc., 600 Safeguard Plaza, Suite 100, Brooklyn Heights, Ohio 44131 (www.eccincorp.com). The EFData 300L modem software includes an application programming interface ("API") that permits parameters, such as modulation method and error correction methods (presently including the former FEC and soon the latter FEC), to be configured via a "remote control" asynchronous EIA-232 I/O port. The remote control port (603) on the EFData 300L modem is connected by an internal cable to a first port on the UART (604) on the DSP-based computer embedded on the Diplexer/Switch Board (such computer is called an "Embedded DSP"). This async connectivity enables the Embedded DSP to configure and control the EFData 300L modem. The Inmarsat-B MES normally used with the Inmarsat-B Diplexer/Switch Board is the Nera Saturn Bm ("Saturn B"), manufactured by Nera ASA, Kokstadveien 23, Bergen, Norway (www.nera.no). The Saturn B software is available with an API that enables external control of the Saturn B HPA via a standard EIA-232 or data terminal equipment ("DTE I/O") port on the MCU. A second port (605) on the UART in the Embedded DSP is connected to the Saturn B DTE I/O port (606) to provide an M&C channel between the Diplexer/Switch Board and the MCU. M&C messages exchanged between the MCU and the Diplexer/Switch Board include messages reporting the status and configuration of the Saturn B and messages to control the transmit power level of the Saturn B HPA.

The Saturn B API may also enable external use of the MCU display and telephone keypad so that user input and display output can be sent through the Saturn B DTE I/O port (606) to the DSP. L-band modems and Inmarsat-B MESs of other manufacturers can be used so long as such equipment provides the APIs, I/O ports, and control capabilities that are described above and required by the Diplexer/Switch invention. Such APIs are specific to a given manufacturer's equipment, and the commands and parameters provided by the Diplexer/Switch M&C Software are tailored to support each such API. A third port (607) on the UART is used for diagnostic purposes by connecting a local PC or an async M&C channel to the Diplexer/Switch Server via an external network. A fourth port (608) on the UART can be used to connect to an engineering services channel ("ESC") card that, if installed in the Diplexer/Switch modem, multiplexes in the traffic path a Diplexer/Switch M&C channel to the network management system. When an ESC card is not installed in the enhanced modem, the fourth port on the UART can be used for other Diplexer/Switch M&C purposes, such as handover coordination in a redundant configuration of Inmarsat-B Diplexer/Switch equipped MESs described below. The DSP also sets some status LEDs on the user interface displays of the enhanced modem and/or MCU and sets control leads (609, 610) for the entry and exit switches on the Diplexer/Switch Board. If additional control of local async devices is desired, such as when an ESC M&C path, a redundant configuration of Inmarsat-B Diplexer/Switch MES Retrofits, and a dedicated diagnostic port are required, a UART with additional ports (e.g., a 6 port UART) may be used. The Embedded DSP executes a copy of the Diplexer/Switch M&C Software that controls whether the Enhanced Services mode of operation can be activated. During Standard Services mode, the enhanced modem has no transmit output.

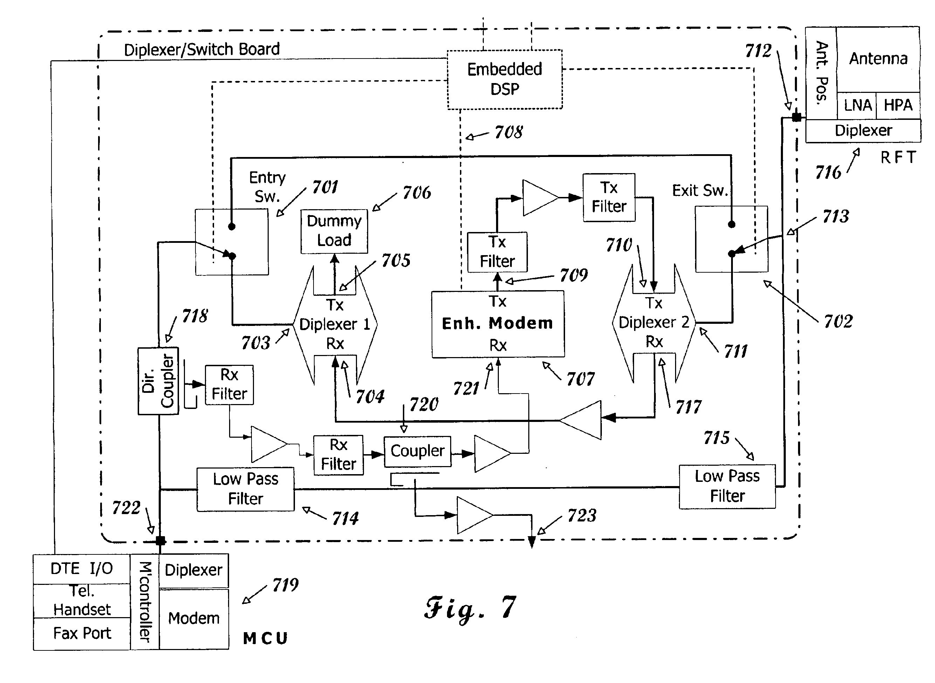

As shown in FIG. 7, during Enhanced Services mode, the Diplexer/Switch M&C Software running on the Embedded DSP (720) throws the entry switch (701) and the exit switch (702) from the bypass path to the enhanced path, and the transmit path from the enhanced modem is fed to the HPA in the RFT (716). The transmission path from the MCU and from the enhanced modem, through the Diplexer/Switch Board, to the RF terminal is two way (transmit and receive) except during Enhanced Services modes, when the standard modem transmit path is terminated in a dummy load (706).

As shown in FIG. 7, when Enhanced Services mode is activated, the entry (701) and exit (702) switches on the Diplexer/Switch Board are thrown to the enhanced path, thereby inserting the enhanced modem and other active components on the Diplexer/Switch Board into the RF path to the RFT. Just as in the first and second embodiments, in Enhanced Services mode, the entry switch (701) on the Diplexer/Switch Board connects the multiplexed output of the MCU to the diplexed port (703) of a first diplexer in the Diplexer/Switch Board. The first diplexer separates the receive and transmit paths and provides them to receive (704) and transmit (705) ports, respectively, of the first diplexer. At the transmit port of the first diplexer, the standard MCU transmit path is terminated in a dummy load (706). Before entry into Enhanced Services mode, the enhanced modem (707) is first activated by a command from the Diplexer/Switch M&C Software over an M&C control path (708). In Enhanced Services mode, the enhanced modem transmit path (709) is connected through an amplifier and filter to the transmit port (710) of a second diplexer. The diplexed port (711) of the second diplexer is connected through the exit switch (702) to the exit connector (712). Between the exit switch (702) and the exit connector (712) at a combining point (typically, a "T" connection on the exit connector side of the exit switch (713) or on the exit switch itself), the diplexed transmit and receive path from the diplexed port (711) of the second diplexer are combined with the standard M&C channel and DC power that pass through the first and second low pass filters (714, 715). The multiplexed path continues from the combining point through the exit connector on the Diplexer/Switch Board, via the antenna feed line, to the RFT (716). Because the standard M&C channel and DC power pass undisturbed through the Diplexer/Switch Board, the MCU can control the HPA and antenna during both Standard Services and Enhanced Services modes.

During Enhanced Services mode, from the exit connector (712) on the Diplexer/Switch Board, the receive path follows the traffic path through the exit switch (702) to the diplexed port (711) of the second diplexer and appears at the receive port (717) of the second diplexer. The receive path is then amplified and feeds the receive port (704) of the first diplexer, which diplexes the receive channel into the traffic path that runs through the entry switch (701) and the directional coupler (718) to the MCU (719). The directional coupler (718) between the entry connector and the entry switch on the Diplexer/Switch Board provides a branch of the receive path from the antenna. From the directional coupler (718), the branch receive path is amplified, filtered, passes through a second coupler (720), is amplified again, and then feeds the receive port (721) of the enhanced modem. By feeding the receive port of the enhanced modem from a directional coupler (718) between the entry connector (722) and the entry switch (701) on the Diplexer/Switch Board, the receiver in the enhanced modem obtains a received signal independent of the position of the entry and exit switches. The tapped output of the second coupler (720) in the branch receive path is amplified and provided to an L-band receive monitor connector (723) on the Diplexer/Switch Board. The insertion point of the branch receive path can be placed at a number of locations, e.g., between exit switch (702) and exit connector(712), in the receive path on the Diplexer/Switch Board to achieve the same effect.

Inmarsat-B MCUs and HPAs, including those in the Saturn B are designed to meet and continuously monitor the strict MES performance specifications mandated by Inmarsat. If the HPA used with the Saturn B amplifies a waveform that lacks a constant envelope, the Saturn B management software interprets the HPA state to be abnormal, reports an error condition, and turns off the HPA. Therefore, the input signal to the HPA from the enhanced modem and from the standard modem both have a constant envelope waveform. Because the Enhanced Services signal bandwidth and power requirements are different for different data rates, during Enhanced Services mode, the Diplexer/Switch M&C Software uses M&C messages to the MCU to adjust HPA power level to meet the requirements for the configured data rate. During Enhanced Services mode using an Inmarsat-B Diplexer/Switch Board retrofitted with current models of a Saturn B as the standard MES, the transmit amplifiers on the Diplexer/Switch Board are driven into compression to remove some effects of the drive level control circuitry in the Saturn B HPA that would otherwise cause the HPA to be switched off. Specifically, this compression helps to remove amplitude variations introduced by the built-in filtering of the enhanced modem and to produce a "constant envelope" signal that is acceptable to the drive level control circuitry of the HPA. The output of the HPA during Enhanced Services mode still complies with Inmarsat-B RF specifications, including those for spectral purity.

An L-band receiver, spectrum analyzer, or other equipment can be connected to the L-band receive monitor connector (723). By inserting in the branch receive path connecting the directional coupler (718) with the receive port (721) of the enhanced modem additional filter(s), amplifier(s), splitter(s), and/or couplers (including directional coupler(s)) in a manner known in the art, additional isolated L-band receive ports can easily be created. Such additional L-band receive monitor ports can be used to receive broadcast and other one-way communications services. Maintaining receive path continuity from the RFT, through the exit switch, through the second diplexer, through the first diplexer (after amplification), through the entry switch, through the directional coupler to the MCU, and finally to the receiver in the MCU enables the MCU to monitor the CESAL carrier during Enhanced Services mode. The diplexer/switch is therefore transparent to the downlink path and L-band receivers associated with the downlink, e.g., both the MCU and the enhanced modem receive the downlink path regardless or which system is selected for uplink transmission. This permits both the MCU to remain locked on the CESAL carrier and the enhanced modem to remain locked to the Enhanced Services forward carrier (from the LES) at all times, which allows the MCU to continuously track and peak the antenna on the desired satellite. Remaining locked to the CESAL carrier also permits M&C messages from the network management system to the Diplexer/Switch M&C Software transmitted via the CESAL carrier to be received without interruption. In the context of receiving M&C messages from the network management system, "CESAL carrier" includes any carrier used to send messages to the Diplexer/Switch M&C Software, such as carrier received through the L-band receive monitor connector (723) and processed to provide M&C messages through a UART port on the associated Diplexer/Switch Board.

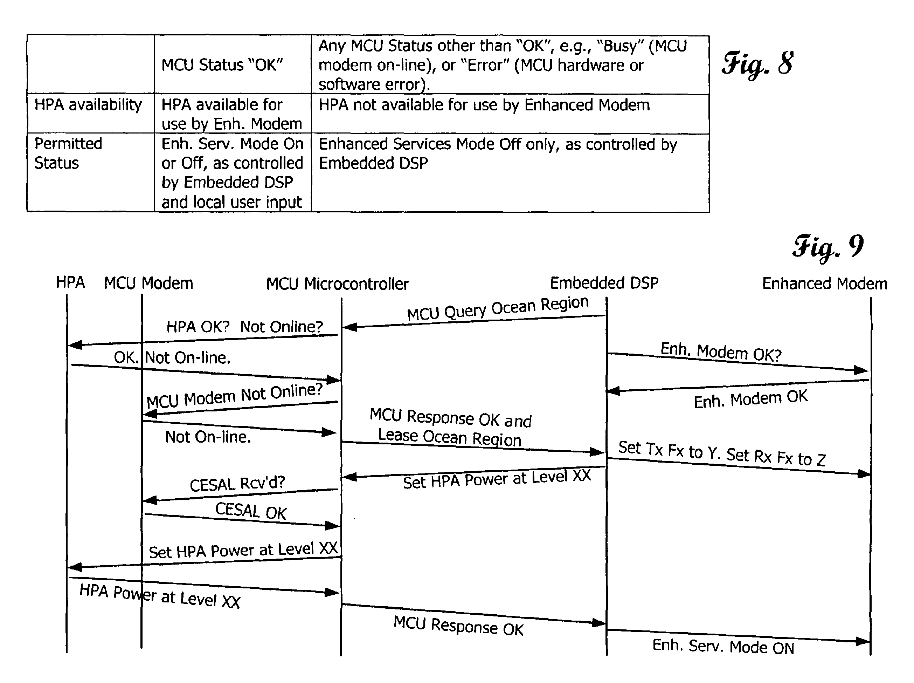

FIG. 8 shows a state table that specifies under what MES conditions the Diplexer/Switch M&C Software can acquire use of the ADE for Enhanced Services mode operations. The Diplexer/Switch M&C Software controls the entry and exit switches and the enhanced modem directly and the HPA through messages to the MCU. The Diplexer/Switch M&C Software polls the MCU frequently to learn MES status. To ensure compliance with Inmarsat specifications, if the MCU detects an error condition in the MES (including the HPA), the MCU changes MES status messages from "OK" to an error message. Enhanced Services mode can be invoked manually (if the Diplexer/Switch M&C Software is configured to permit manual invocation of Enhanced Services mode) or according to configuration parameters (i.e., start and stop times) stored in NVRAM associated with the Embedded DSP. The Diplexer/Switch M&C Software also prevents an Inmarsat-B Diplexer/Switch Board from entering or remaining in Enhanced Services mode unless the Inmarsat-B Diplexer/Switch Board is currently receiving forward carrier (i.e., RF carrier from a LES to a given Inmarsat-B Diplexer/Switch Board).

FIG. 9 shows the message exchange managed by the Diplexer/Switch M&C Software to enter Enhanced Services mode upon the occurrence of a start time in a configuration stored in NVRAM. The message exchange is used to confirm that certain predefined engineering, geolocational, and contractual conditions required for entry into Enhanced Services mode are satisfied. The Diplexer/Switch M&C Software can only acquire use of the ADE for Enhanced Services mode operations (and adjust the HPA power level during Enhanced Services mode) when MES status is "OK" and the standard modem is idle (not busy with a call). At any time, if the Diplexer/Switch M&C Software detects an MES status of "error" or "standard modem busy," the Diplexer/Switch M&C Software prevents entry into Enhanced Services mode. During Enhanced Services mode, if the Diplexer/Switch M&C Software detects an MES status of "error" or "emergency call", or the date and time are not within the authorized start time and stop time for Enhanced Services, or a user configures the MCU for an ocean region that the Inmarsat-B Diplexer/Switch Board does not have a configuration for, or a user terminates Enhanced Services mode by entering a "Standard Services" command through the user interface (e.g., to send a standard dial-up call, including a distress call via X.25 or telex), or a diplexer or other enhanced path component fails, then the Diplexer/Switch M&C Software switches the traffic path from the enhanced path to the bypass path, thereby reconnecting the MCU directly through the bypass path to the RFT. In addition to the conditions described above, a given lessor may require the satisfaction of other conditions before entry into Enhanced Services mode.

The functionality and architecture of a network management system that can be used with the first and second embodiments of the Diplexer/Switch invention is well known in the art. Such network management systems comprise at least one network management server running network management software and various network paths to RF communications remote terminals. The network management system manages resources for Enhanced Services with functionality analogous to that provided by an NCS and ACSE for Standard Services, plus additional functionality explained below that is specific to Enhanced Services. One distinct advantage of the first and second embodiments of the Diplexer/Switch invention is that the Diplexer/Switch M&C Software can use non-real-time control paths and messages, and validate such messages before implementing them. The Diplexer/Switch M&C Software for a different brand and model of MES would be specific to the APIs of such different brand and model.

To control an RF communications remote terminal equipped with a second or third embodiment of the Diplexer/Switch invention ("Enabled Terminal"), the network management system addresses M&C messages to a given enhanced modem (each of which has a unique address) and uses an M&C channel to send an M&C message to the Embedded DSP that controls the uniquely addressed modem in an Enabled Terminal. The handling of M&C messages is the same in a second embodiment of the Diplexer/Switch invention, except that the external computer receives, validates, stores, executes, transmits, and otherwise handles M&C messages rather than an Embedded DSP. In the context of the handling of M&C messages in the second embodiment of the Diplexer/Switch invention described above, references in the M&C description of the third embodiment to "Embedded DSP" should be read to mean "external computer", and references to UART, firmware, and other technology associated with an Embedded DSP should be read to mean the equivalent technology (e.g., bus, cable, Ethernet card, software) used with such external computer.

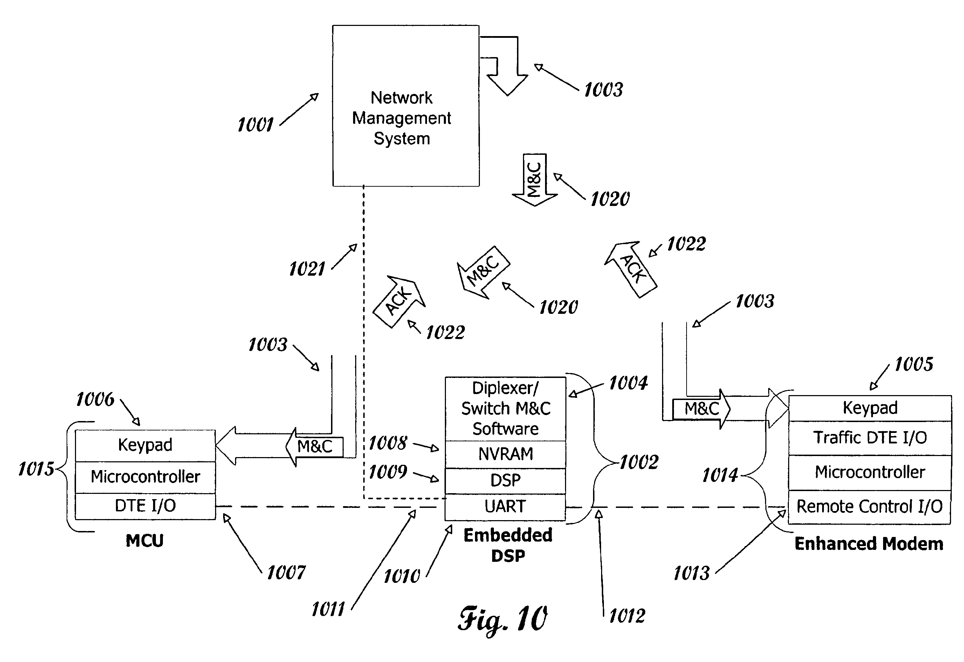

As shown in FIG. 10, in the Inmarsat-B Diplexer/Switch Board, upon receipt by a human end user of an M&C message delivered by a non-real time M&C channel, such as mail or fax, the human end user enters the set of numbers (and/or characters, depending on the input device) comprising the standalone M&C message on the keypad (1005) of the enhanced modem (1014) or of the MCU telephone handset (1006). A non-real-time M&C message may optionally be entered using a front panel keypad, pushbutton(s), or other input device on the MCU, so long as such input devices are made available by an MCU API through the MCU DTE I/O port (1007). As explained in more detail below, the Embedded DSP validates an M&C message upon receipt and stores the validated configuration information in NVRAM (1008) associated with the Embedded DSP. Before storing a configuration, the Embedded DSP confirms the target of the configuration is an enhanced modem under the control of the Embedded DSP. Configurations in an M&C message are implemented by the Embedded DSP of an Enabled Terminal based on the current ocean region configuration of the Enabled terminal and the current date and time specified in a delivered configuration. For Enhanced Services, the network management system manages the power and bandwidth as a pool through methods that are appropriate for the Enhanced Services implementation, e.g., four Enhanced Services carriers in a given 100 kHz of bandwidth, or a single Enhanced Services carrier using 200 kHz of bandwidth.

The Embedded DSP contains a DSP (1009), a UART (1010) with four or more asynchronous ports, NVRAM (1008) or other nonvolatile memory, RAM, a memory bus, a system bus, and support circuits, all as known in the art of embedded processors. All M&C paths between the DSP and components on the Diplexer/Switch Board, the MCU, the enhanced modem, and a real-time M&C network management channel (if any) flow through the UART. The UART, entry and exit switches on the Diplexer/Switch Board, and the enhanced modem (1014) are under direct and full-time control by the Embedded DSP Through the UART (1010) and an async real-time M&C control path (1011) from the UART to the MCU DTE I/O port (1007) on the MCU (1015), the DSP uses the API of the MCU management program to control the HPA during Enhanced Services mode, to receive data from the MCU keypad, and to display data on the MCU telephone handset display, or other MCU display. Through the UART (1010) and an async real-time M&C control path (1012) from the UART (1010) to the enhanced modem remote control I/O port (1013), the DSP uses the API of the enhanced modem management program to control the enhanced modem during Enhanced Services mode, to receive data from the enhanced modem keypad (1005), and to display data on the enhanced modem display (if any). As described below, additional ports on the UART (1010) can be used to provide an M&C channel for diagnostic services, and to control optional external equipment. A real-time M&C path (1021), if available, enables the Embedded DSP to exchange M&C messages with the network management system the a UART (1010) port. Real-time M&C paths between an Enabled Terminal and the network management system may be redundant, although a single path is shown in FIG. 10.

The Diplexer/Switch M&C Software (1004) running on the Embedded DSP (1002) monitors, among other variables, status of the enhanced modem (1014), status of the MCU (1015), and local user inputs via the keypad (1005) of the enhanced modem and via other M&C channels interfaced with the Embedded DSP through the UART (1010). This status information for the various components of the Inmarsat-B Diplexer/Switch Board is processed by the Embedded DSP and reported to user displays and, optionally, to the diagnostic port or other M&C path(s) connected to the UART. A local user can force a switch, e.g., for a distress call, from Enhanced Services mode to Standard Services mode from a user interface on a device connected to the UART (1010), e.g., MCU keypad, enhanced modem keypad, or diagnostic PC. Keypad, keyboard, and graphic user interfaces for such tasks are well known in the art.

The network management system (1001) manages and controls the critical parameters of Inmarsat-B Diplexer/Switch Boards through the use of a real-time and/or non-real-time ("NRT") M&C messages. As shown in FIG. 10, NRT M&C messages (1020) or real-time messages sent over a network path (1021) that are generated by the network management system are received by the specific Enabled Terminal addressed in the M&C message. In an NRT M&C channel, the local user of the Enabled Terminal in FIG. 10 enters an NRT M&C message through either the keypad (1005) on the enhanced modem or the keypad (1006) on the MCU handset. The Embedded DSP in the Enabled Terminal collects the entered M&C message through a local M&C channel (in the case of a Saturn B Enabled Terminal, such local M&C channel is normally carried on a local async M&C path (1011) between the Embedded DSP and the MCU, or a local async M&C path (1012) between the Embedded DSP and the enhanced modem, depending upon which keypad was used to enter the M&C message, and which embodiment of the Diplexer/Switch invention is being used). A real-time M&C message sent by an M&C network path (1021) is received through the UART (1010) associated with the Embedded DSP in the addressed Enabled Terminal.

Configuration of critical parameters for a given enhanced modem is possible only by processing M&C messages at the Enabled Terminal containing that enhanced modem. As described above, the control paths between a network management system and an Embedded DSP can include both NRT, or standalone, M&C control paths (1003) and/or real-time M&C control paths (1021). An NRT M&C control path includes the use of telex, telegram, email or fax, as well as non-electronic messaging, such as a letter or oral message (each, a "non-real-time M&C channel"). Real-time control paths may be used, such as an ESC between the network management system and an Embedded DSP, or external network connectivity between the network management system and an Embedded DSP (each, a "real-time M&C channel"). An ESC normally uses the same transmission path as used by the payload or traffic messages exchanged between two nodes in a communications network. The same content and format of M&C messages are communicated, regardless of whether the M&C channel between the network management system and the Embedded DSP is a real-time M&C channel or an NRT M&C channel. M&C messages normally do not contain commands, only configurations, although some configurations can essentially be commands. For instance, a switch to Standard Services mode from Enhanced Services mode can be forced by sending an M&C message with appropriate start/stop times. In contrast, when an Enabled Terminal is in a Standard Services mode, local user involvement is normally required to enter Enhanced Services mode, even if an Enhanced Services configuration with a valid start time has been previously received and stored in NVRAM (1008). An Inmarsat-B Diplexer/Switch Board will normally not enter Enhanced Services mode unless the correct CESAL carrier (or equivalent carrier in non-Inmarsat-B services) is being received and a local user activates Enhanced Services mode using a local user interface. Although local user involvement in activating Enhanced Services mode is the norm, the Diplexer/Switch M&C Software can be configured so that such activation is automated so long as all engineering, geolocational, and contractual conditions required for entry are satisfied. Some entities using Enabled Terminals may elect to minimize local user involvement, and use as much software controlled management as possible. Other entities may elect reserve certain tasks for local users. The network management system and Diplexer/Switch M&C Software are tailored to reflect the entity's allocation between user controlled tasks and software controlled tasks.

The Embedded DSP uses an M&C channel on the async M&C path (1011) to the MCU periodically to query the MCU to determine the ocean region setting using the message exchange shown in FIG. 9. Based on the current ocean region reported by the MCU, the Embedded DSP will select the appropriate valid configuration stored in NVRAM (1008) for implementation. An MCU response of "error", "busy", "no carrier" causes the Embedded DSP to remain in Standard Services mode. If the MCU status reply is "OK", the Embedded DSP commands the MCU to turn on the HPA at a power level specified in the command, and to set a power level alarm threshold. If the power level alarm threshold is reached, the MCU turns off the HPA. If the MCU turns on the HPA in response to the command from the Embedded DSP, the Embedded DSP turns on the enhanced modem and throws the entry and exit switches on the Diplexer/Switch Board to connect the enhanced modem to the ADE. Also stored in NVRAM are power level vs data rate settings applicable to a given HPA; these settings are used by the Diplexer/Switch M&C Software to control the power level of the HPA based on the Enhanced Services data rate. Multiple configuration tables for multiple ocean regions may be stored in NVRAM.

To resolve interference problems, or for other control or safety measure, LES operators may drop the forward carrier to an Enabled Terminal for a selectable number of minutes ("time out period") to invalidate a current operating configuration of a given Enabled Terminal in Enhanced Services mode listening to that specific forward carrier. To effect such a LESO policy, on loss of forward carrier, the Diplexer/Switch M&C Software in an Enabled Terminal starts a timer and polls the MCU with queries to confirm that the MCU is responding and not reporting loss of CESAL carrier. If forward carrier is lost, but the MCU responds "OK" continuously without indicating a loss of CESAT. carrier for a given time out period, the Diplexer/Switch M&C Software will cause the Enabled Terminal to disable Enhanced Services mode until new M&C messages are received from the network management system (1001)

All M&C messages processed by an Embedded DSP reach the Embedded DSP through the UART on the Diplexer/Switch Board. All M&C messages normally use the same format (if M&C message has been encrypted, then the same format after decryption), regardless of which UART port (MCU, enhanced modem, diagnostic, real-time M&C channel, redundant configuration of Enabled Terminals (if any)) a given M&C message transits. M&C messages containing critical configuration parameters are often encrypted, whether individually or as a consequence of transiting a network in which all traffic is encrypted (e.g., a military secure network). By using encryption, critical configuration parameters that if incorrectly or maliciously entered would cause interference to other users of a shared RF communications resource (e.g., Inmarsat users) can be delivered as M&C messages using a real-time or non-real-time M&C channel. Messages other than M&C messages, including unencrypted messages where appropriate, can also use the M&C channels. Based upon the policies of the lessor, the forward carrier to an Enabled Terminal required to implement a configuration in an M&C message may not be provided unless an acknowledgement is received by the network management system within a time-out period selected by the lessor and commencing on the time when a given M&C configuration message was transmitted by the network management system. Use of an encrypted network and handling of decrypted M&C messages by well-disciplined local users, e.g., use of a secure military network and of military local users, is an alternative to using encrypted M&C messages. If encrypted M&C messages are used, the Embedded DSP can decrypt the message as part of the message validation procedure. Encrypted M&C messages can use only numeric characters to simply entry of the messages using a telephone keypad.

Upon receipt of an M&C message by an Embedded DSP, the Diplexer/Switch M&C Software decrypts an M&C message (if encrypted), validates the message contents, and stores the validated data in NVRAM associated with the Embedded DSP. An M&C message contains parameters known in the art as necessary to configure a remote terminal (including mobile earth stations) for operation in a satellite communications network. Typical parameters are: ocean region (for Inmarsat-B Diplexer/Switch Boards and other Enabled Terminals used in Inmarsat systems), a unique identifier for each enhanced modem, operation start time and date, data rate, operation end time and date, HPA power level (for Inmarsat-B Diplexer/Switch Boards and other Enabled Terminals used in Inmarsat systems), time adjustments, transmit frequencies, and receive frequencies. Times and dates are normally in Universal Time Coordinated format. The start and stop date and time in an M&C message have a resolution of a few minutes. On valid entry of a new configuration in a given Enabled Terminal, the newly entered configuration overrides any start/stop time settings previously stored in NVRAM for the same ocean region and start/stop times. If the current time at the location of an Enabled Terminal is outside of these start and stop limits, or an M&C message is invalid, the Embedded DSP causes the Enabled Terminal to remain in Standard Services mode during the period covered by such a M&C configuration message. Optionally, based on the relevant lessor's policy or contractual provision, an M&C message is only valid operationally if confirmed by an acknowledgement message ("ACK") (1022), which can be clear text or encrypted, sent to the network management system by the relevant Enabled Terminal and within a defined period of time ("time-out parameter").

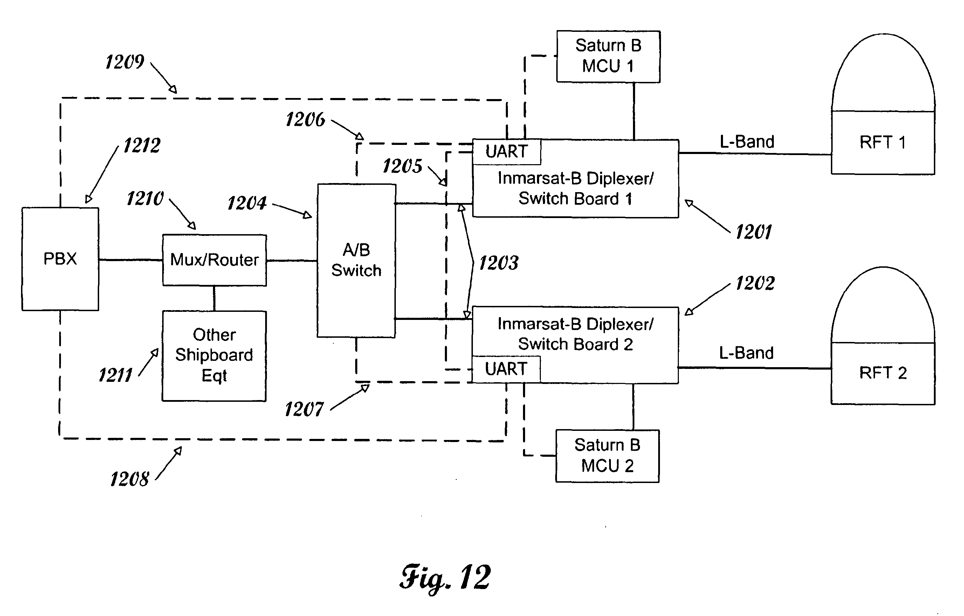

The Diplexer/Switch M&C Software can include the ability to monitor the status of the MCU during Standard Services mode, and if failure of the standard modem is detected, the Diplexer M&C Software configures the enhanced modem for Standard Services mode, and switches from the bypass path to the enhanced path. In this variation of the second and third embodiments, the enhanced modem can operate in Standard Services mode as a backup after failure of the standard modem in the MCU and cutover to the enhanced modem. The Diplexer/Switch M&C Software must, in this variation of the second and third embodiments, include all the functionality of the MCU (or other standard RF communications remote terminal) M&C software, since the Diplexer/Switch M&C Software must appear to the standard network management system as if it were running on the standard MCU (or for other services, on the equivalent non-Inmarsat-B terminal). When switched online as a backup to the standard modem, this variation of the second and third embodiments also requires that the Diplexer/Switch M&C Software switch the baseband bitstream to the enhanced modem data input from the normal Enhanced Services mode bitstream to the bitstream normally fed to the standard modem. The means of replicating a bitstream and controlling an A/B switch to select one bitstream from two candidate bitstreams based on a monitored status (i.e., whether or not the standard modem is "OK") are well known in the art. An analogous example of such A/B switching is presented below in the description of FIG. 12. This "standard modem failover to enhanced modem" configuration would likely require type approval if used for Inmarsat-B and other services requiring such equipment approvals.

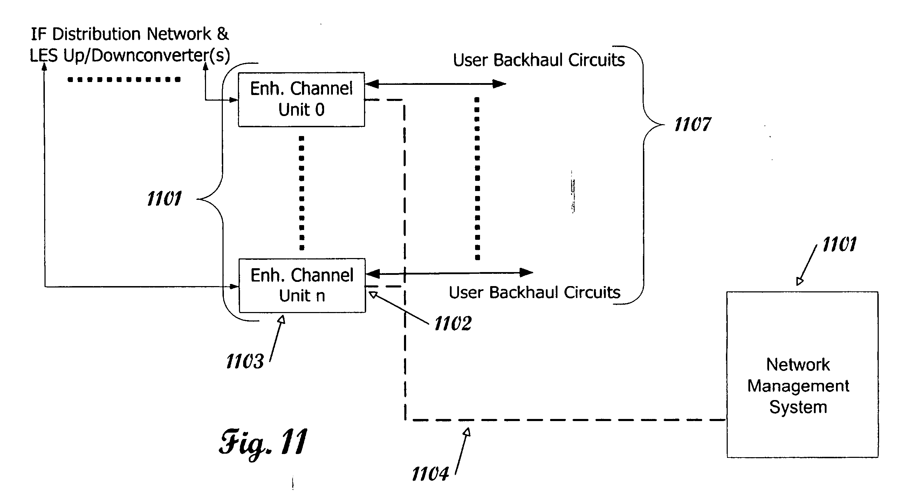

As shown in FIG. 11, at the LES, for each Enabled Terminal, there is a counterpart Enhanced Channel Unit allocated from a pool of Enhanced Channel Units (1101) providing satellite communications services to Enabled Terminals. Inmarsat-B services use C-band paths between an LES and an Inmarsat satellite (including both operational and lease satellites), and L-band paths between an Inmarsat satellite and an MES. The Enhanced Channel Unit used in traffic paths with Enabled Terminals for Inmarsat-B service comprises an Inmarsat compliant, programmable satellite modem with 70 MHz intermediate frequency ("IF") and internal microcontroller, an M&C interface, and the ability to be configured through the M&C interface by exchange of M&C messages with a network management system. The Enhanced Channel Unit normally used in association with embodiments of the Diplexer/Switch invention that use an EFData 300L as the enhanced modem is an EFData SDM-300A ("EFData 300A"), which supports various modulation methods, FEC rates, and Reed-Solomon error correction. The EFData 300A modem is manufactured by Comtech EFData, 2111 West 7^{th} Street, Tempe, Arizona 85281 (www.efdata.com) and has a 70 MHz IF transmit/receive interface. A transmit port of the Enhanced Channel Unit interfaces with an upconverter, and a receive port of the Enhanced Channel Unit interfaces with a downconverter, in a manner known in the art. Use of upconverters and downconverters provides the C-band interface required by an HPA (transmit path) and LNA (receive path) at an LES. From the remote control I/O port (1102) of an Enhanced Channel Unit (1103), M&C messages are routed via an M&C channel (1104) that interconnects the Enhanced Channel Unit (1103) and the network management system (1101). Encryption is not normally applied to M&C messages exchanged between a network management system and an Enhanced Channel Unit. To configure and manage Enhanced Services, the network management system exchanges M&C messages with an Enhanced Channel Unit and with the Enabled Terminal with which the Enhanced Channel Unit shares a traffic path. The M&C channel between the Enhanced Channel Unit and the network management system uses a real-time interactive path. In the event of a failure of a given network management system, the network management duties of the failed network management system are normally assumed by a redundant network management system at the same LES or by a redundant network management system at a different LES. The M&C channel to a given Embedded DSP may be a standalone, non-real-time M&C channel, so a network management system does not necessarily exchange messages directly with an Enabled Terminal. If an M&C channel is available on a real-time M&C path between the network management system and an Enabled Terminal, the real-time M&C path can be used.

The packaging and user interfaces of the components of an Enhanced Channel Unit for Inmarsat-B Enhanced Services differ from the packaging and user interfaces of an Enabled Terminal since trained operators, rather than users, are responsible for the equipment at an LES. Whereas a ship may only have a single MES, an LES may serve hundreds or thousands of MESs and have its Inmarsat-B electronics in a dense packaging form, such as rack-mounted chassis, each chassis having circuit boards that serves a series of MESs. Packaging of the components of an Enhanced Channel Unit is normally in a similarly dense packaging form, such as rack-mounted chassis. A Diplexer/Switch Board is not used with an Enhanced Channel Unit since transmit and receive paths, DC power, and M&C channels are not diplexed onto a single antenna feed path at an LES. Instead, IF combiners and amplifiers, if needed, are used to frequency multiplex multiple transmit carriers onto a single transmit path which is connected to one or more upconverters and then to an HPA. In the receive path, LNA output is fed to one or more downconverters, which then feed dividers and amplifiers, if needed, to provide multiple receive paths to the receive port of a given Enhanced Channel Unit. The LES connects MES users to terrestrial network nodes using backhaul traffic paths (1107). The LES can also interconnect such users to other MES users (including users of Enabled Terminals) served by that LES, for instance, for ship-to-ship dial-up calls or ship-to-ship leased slot services. In a given leased slot, the transmitter for the forward carrier (shore-to-ship) at the LES and the receiver for the forward carrier at the Enabled Terminal are configured for the same combination ofFEC and modulation. Similarly for the return carrier (ship-to-shore), the transmitter at an Enabled Terminal and the receiver at the LES are configured for the same combination of FEC. For Standard Services mode, the forward and return carriers are configured to occupy the same bandwidth and operate at the same data rate. However, this one-for-one relationship between the forward and return carriers is not a requirement for Enhanced Services and differing data rates, modulation, and/or FEC configuration options may be used to meet the requirements of the application. For instance, a user may use asymmetric Enhanced Services in which two or more Enabled Terminals in Inmarsat-B service share given leased bandwidth (one or more slots), and the transmit and receive data rates and bandwidths are different for the forward and return carriers.

The enhanced modem used in any of the preceding or following embodiments of the Diplexer/Switch invention can be sourced from a variety of satellite modem manufacturers. It is essential that the enhanced modem used in an Enabled Terminal and the enhanced modem used as an Enhanced Channel Unit to establish a common traffic path be capable of identical configurations related to transmission and reception. For this reason, enhanced modems from the same manufacturer are normally used, since such modems often have both an M&C command set (the set of configuration commands recognized by a modem) and configuration settings in common. The network management system uses the M&C command set to configure each modem in a network. EFData 300L and 300A modems have been described above as suitable for use in Enabled Terminals and Enhanced Channel Units, respectively. Modems other than those manufactured by Comtech EFData can be used in Enabled Terminals and in Enhanced Channel Units; in such cases, the network management system uses the appropriate M&C command set and configuration settings to control the modems. The M&C command set and configuration settings normally used are those published by the modem manufacturer.

As shown in FIG. 12, a fourth embodiment of the Diplexer/Switch invention couples two Enabled Terminals (1201, 1202) in a redundant configuration. Again, a configuration for Inmarsat-B service is used for illustration, but similar configurations can be used with other RF communications remote terminals that use a multiplexed antenna feed line. A redundant configuration is desirable to counteract interruptions due to for antenna blockages or equipment failures. In some installations of RF terminals on ships, depending on the orientation of a ship in relationship to an orbital satellite providing service to the RF terminal, the superstructure of a ship or other obstruction can interrupt a transmission between the satellite and an MES. Using a redundant configuration of Enabled Terminals provides uninterrupted communications service. In this embodiment, the same baseband input and output signals (1203) are supplied to an A/B switch (1204), which in turn provides the baseband signals to one of a pair of two Inmarsat-B Enabled Terminals. Only one of the pair provides Enhanced Services and receives baseband input at a given time. The Embedded DSP in a first Enabled Terminal in the pair communicates with the other Embedded DSP in the pair over an async M&C path (1205) through a port of the UART in each Embedded DSP to compare received signal strength data. Each Embedded DSP also communicates with the A/B Switch (1204) over a separate async M&C path (1206, 1207) using a port of the UART in such Embedded DSP to control switching by the A/B Switch (1204). The enhanced modem provides received signal strength data to the Embedded DSP controlling it. In this redundant embodiment of the Diplexer/Switch invention, the instruction and data set of the Diplexer/Switch M&C Software is expanded to include the instructions and data required to determine which of the two Enabled Terminals is receiving the stronger signal from the lease satellite providing service, and if the received signal strength at one of the Enabled Terminals in the pair exceeds the received signal strength at the other Enabled Terminal in the pair by a selectable threshold amount, and if the Enabled Terminal with the weaker received signal strength is online (i.e., in Enhanced Services mode) in providing a traffic path to the LES, the Diplexer/Switch M&C Software switches the Enabled Terminal with the stronger received signal strength into Enhanced Services mode (i.e., it becomes the online one of the pair providing a traffic path to the LES) and switches the Enabled Terminal with the weaker received signal strength off-line. The Diplexer/Switch M&C Software making the off-line Enabled Terminal the online terminal in a redundant pair of Enabled Terminals ("Handover") also occurs as a result of detection by the Diplexer/Switch M&C Software of fault conditions in the online Enabled Terminal. Fault conditions that would trigger Handover include a loss of demodulated signal, component failure, or differentially and rapidly deteriorating signal quality in the online Enabled Terminal versus the off-line Enabled Terminal.

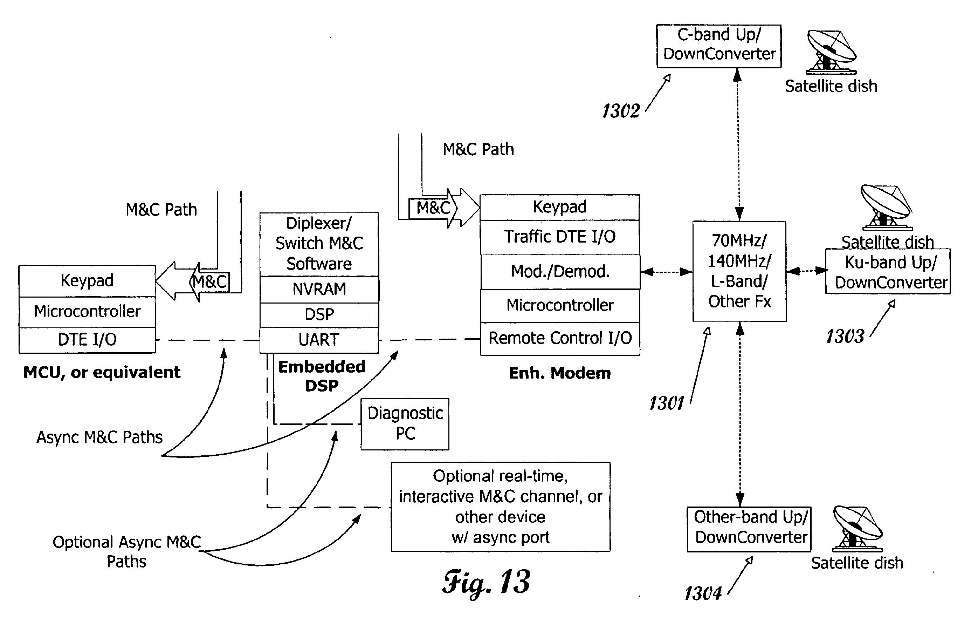

As shown in FIG. 13, other embodiments based on the Diplexer/Switch invention can be used to retrofit RF communications remote terminals used for services other than the C-band forward path/L-band return path service used by Inmarsat-B. Most hub earth stations, such as LESs, use satellite modems with a uniform 70 MHz IF interfaces (in some cases, other IF frequencies are used) (1301). Converting transmit and receive paths between IF frequencies and uplink/downlink frequencies ("Satlink Frequencies") at hub earth stations works as described above in the discussion of the IF frequency to C-band Satlink Frequencies conversions associated with the Enhanced Channel Unit, except the Satlink Frequencies in these other Diplexer/Switch embodiments can be a band other than C-band (e.g., Ku-band, Ka-band). Diplexer/Switch embodiments in remote terminals can also use upconverters and downconverters under the control of the network management system and, locally, the Diplexer/Switch M&C Software, to provide Satlink Frequencies in addition to the L-band return path used by Inmarsat-B MESs. In such embodiments, upconverters and downconverters (1302, 1303, 1304) are inserted on the Diplexer/Switch Board between the transmit port and receive port, respectively, of the second diplexer and the enhanced modem. One or more upconverters convert the IF frequency of the transmit output of the enhanced modem to the uplink Satlink Frequency, and one or more downconverters convert the downlink Satlink Frequency to the IF frequency of the receive input of the enhanced modem in a manner known in the art. For instance, in a retrofit embodiment for a Ku-band earth station, an enhanced modem with a 70 MHz band intermediate frequencies would be equipped with upconverters to match the 14 GHz uplink band, and downconverters to match the 12 GHz downlink band (1303). The network management system, and the Diplexer/Switch M&C Software and the Embedded DSP in each remote terminal embodiment, would operate in the manner described for the Enabled Terminal for Inmarsat-B service described above, and also manage and control the upconverters and downconverters used in a given embodiment. In these Diplexer/Switch embodiments, instructions and parameters specific to upconverters and downconverters are included in M&C messages, or by embedding logic in the Diplexer/Switch M&C Software running on the Embedded DSP on the Diplexer/Switch Board. Other than the upconversion and downconversion between IF and Satlink Frequencies, a remote terminal embodiment based on the Diplexer/Switch invention operates the same as an Enabled Terminal for Inmarsat-B service. The use of a Diplexer/Switch, and optionally the use of the encrypted M&C messages and non-real-time M&C channels to disable local user control of critical modem parameters, is as novel in non-Inmarsat satellite services as it is in Inmarsat satellite services.

One example of an enhanced modem suitable for a Diplexer/Switch embodiment for Inmarsat-B and other services and that uses up- and downconverters is the EFData CDM-550, available from Comtech EFData. The CDM-550 has standard transmit and receive IF frequencies of 52 to 88 MHz, and optionally, 104 to 176 MHz. The use of upconverters and downconverters, as described in the preceding paragraph, with the CDM-550 permit the construction of an Enabled Terminal that operates in L, C, Ku, Ka, or other RF operating bands. Importantly, the CDM-550 supports Turbo FEC, and an "in-band" M&C channel interspersed ("framed") within the traffic path, adding even more economic incentive to retrofit installed MESs and other RF communications remote terminals with the Diplexer/Switch invention. The CDM-550 can also be used as an Enhanced Channel Unit, thereby providing a common M&C command set and configuration settings for use by a network management system.

If data compression of the traffic bitstream has not been performed by the user externally, data compression can be performed by a second processor mounted on the Diplexer/Switch Board. Other types of processing of the traffic bitstream, such as packet routing or frame relay access, can optionally be performed in a Diplexer/Switch embodiment by including a router or frame relay access device, respectively, on the Diplexer/Switch Board. If such other traffic bitstream processor is used, e.g., data compressor, router, frame relay access device (collectively, "Baseband Processor"), the user's input signal is applied to the Baseband Processor input, and the Baseband Processor output is applied to the enhanced modem input. The Baseband Processor also performs data decompression, routing, frame relay access, as the case may be, on the receive baseband signal. To use any of the preceding remote terminal embodiments with Baseband Processor in a traffic path, an equivalent Enhanced Channel Unit with Baseband Processor is required at the LES or other hub earth station (or second remote terminal, if link budgets support such connectivity) with which the remote terminal establishes a traffic path. The network management system has M&C channels between the network management system and the Diplexer/Switch embodiments with Baseband Processors and uses M&C messages to configure via the Embedded DSP at each Enabled Terminal the upconverters, downconverters, enhanced modems, and Baseband Processors present in such embodiments. Including Baseband Processors as a component of a Diplexer/Switch embodiment enables the network management system to exchange M&C messages with the Baseband Processors, which simplifies and improves a user's management of baseband devices connected to remote terminals and hub earth station equipment.

In Enabled Terminals equipped with a real-time M&C control path, the network management system can set transmit power and measure the resultant performance, then adjust transmit power to compensate for the remote terminal's location within the satellite footprint and minor pointing errors. Standard Services only perform power level adjustment between a hub earth station and a remote terminal during call set up negotiations. In Enhanced Services, power level adjustment is performed as part of call set up and can be performed periodically during the call or lease period. The procedure of power level adjustment between a hub earth station and a remote terminal is known in the art and typically measures the path performance in terms of bit error rate, carrier/noise, Eb/No, or some other quality factor, and then adjusts power, data rate, error correction, and/or modulation method to achieve the highest performance at the lowest power/bandwidth cost. These embodiments of the Diplexer/Switch invention equipped with a real-time M&C channel can also include dynamic selection of modulation method, dynamic allocation of carrier center frequencies and bandwidth, and dynamic and selection of error correction methods. Such dynamic selection and allocation is known in the art and is managed and controlled by the network management system through an exchange of M&C messages between the network management system and embodiments of the Diplexer/Switch invention equipped with a real-time M&C channel.

Those skilled in the art also will readily appreciate that many modifications to the invention are possible within the scope of the invention. Accordingly, the scope of the invention is not intended to be limited to the preferred embodiments described above, but only by the appended claims.

## Claims

1. A means for enabling a standard, modem-equipped Inmarsat-B mobile earth station control unit (MCU) and an alternate RF modem (201) with an L-band interface to transmit using a single standard Inmarsat-B RF terminal on a mutually exclusive basis by the use of a diplexing means and by at least two RF switches (218,219) controlled by a control means selected from the group comprising a manual switch (220) on an assembly containing the diplexing means and RF switches (218,219), an external computer (422) and multiconductor interface (420) to an assembly containing the diplexing means and RF switches (418,419), and an embedded computer (620) mounted on an assembly containing the diplexing means and RF switches (618,619), whereby the transmit source feeding the RF terminal is switched between the MCU and the alternate RF modem (201) by the setting of the RF switches (218,219), and wherein the MCU and alternate RF modem (201) can receive from the RF terminal regardless of which transmit source is connected to the RF terminal.

2. The apparatus of claim 1, in which higher data rates than are available with a standard MCU are obtained by the use of Viterbi FEC concatenated with Reed-Solomon error correction in the alternate RF modem.

3. The apparatus of claim 1, in which higher data rates than are available with a standard MCU are obtained by the use of Turbo FEC in the alternate RF modem.

4. The apparatus of claim 1, in which the MCU and RF terminal are Saturn B models.

5. The apparatus of claim 1, in which the alternate RF modem is an EFData 300L.

6. The apparatus of claim 1 in which the embedded computer comprises a digital signal processor using non-volatile random access memory("NVRAM") to store configuration data.

7. The apparatus of claim 1 using an external computer (422) and multiconductor interface (420) as a control means, further comprising a second identical apparatus of claim 1 using an external computer (422) and multiconductor interface (420) as a control means, a means for coupling the external computer (422) of the second apparatus with the external computer (422) of the first apparatus, and in which the external computers use a means for determining which apparatus of the pair has better received signal quality at any given time, and a means for selecting the apparatus with better received signal quality to transmit at such time.

8. The apparatus of claim 1 using an embedded computer (620) as a control means, further comprising a second identical apparatus of claim 1 using an embedded computer (620) as a control means, a means (1205) for coupling the embedded computer (620) of the second apparatus with the embedded computer (620) of the first apparatus, and in which the embedded computers (620) use a means for determining which apparatus of the pair has better received signal quality at any given time, and for selecting the apparatus with better received signal quality to transmit during such given time.

9. The apparatus of claim 1 in which the control means is a computer (620), further comprising a management and control ("M & C") network connection selected from the group comprising an indirect M & C network connection between the control means and a network management system and a direct M & C network connection between the control means and a network management system, wherein the control means receives M & C messages containing configuration data and switches the transmit source between the MCU and the alternate RF modem (601) based on such configuration data.

10. The apparatus of claim 9, wherein the control means validates M & C messages received via the M & C network connection from the network management system before implementing such M & C messages.

11. The apparatus of claim 9, wherein the M & C network connection from the network management system to the control means is a direct M & C network connection using a CESAL carrier monitored by the control means.

12. The apparatus of claim 9, wherein the M & C messages are encrypted when transiting the M & C network connection using an encryption method selected from the group comprising individual encryption and decryption of each message, and using an encrypted M & C network that provides encryption and decryption of the transmission path used for M & C messages.

13. The apparatus of claim 1 in which the control means is a computer (620), further comprising a means for exchanging messages between the control means (620) and the MCU to coordinate switching the transmit source between the MCU and the alternate RF modem (601).

14. The apparatus of claim 13, wherein the switching management program confirms the satisfaction of predefined engineering, geolocational, and contractual conditions before switching the transmit source from the MCU and to the alternate RF modem (601), and after switching the transmit source to the alternate RF modem (601), switches the transmit source back to the MCU upon the failure of a condition.

15. The apparatus of claim 1 in which the control means is a computer (620), further comprising distribution of the digital input/output bitstream normally feeding the satellite modem contained in the MCU to one port of an A/B switch, distribution of the digital input/output bitstream normally feeding the alternate RF modem to a second port of the A/B switch, and a means for monitoring by the switching management program of the configuration and status of the satellite modem contained in the MCU, and if failure of the satellite modem contained in the MCU is detected by the switching management program, the switching management program configures the alternate RF modem (601) with the same configuration as the satellite modem (107) contained in the MCU had immediately prior to failure, switches the A/B switch so that the digital input/output bitstream normally feeding the satellite modem (107) contained in the MCU is fed to the alternate RF modem (601), and switches the transmit source feeding the RF terminal from the MCU to the alternate RF modem, thereby providing redundancy for the satellite modem (107), contained in the MCU.

## Patentansprüche

1. Einrichtung, die ermöglicht, dass eine mit einem Modem versehene und mobile Standard-Inmarsat-B-Bodenstation-Steuereinheit (MCU) und ein wechselndes Hochfrequenzmodem (201) mit einer L-Band-Schnittstelle unter Verwendung einer einzigen Standard-Inmarsat-B-Hochfrequenzstation auf sich gegenseitig ausschliessender Basis und unter Verwendung eines Diplexer-Mittels und von zumindest zwei Hochfrequenzschaltern (218, 219), die von einem Steuermittel gesteuert werden, das ausgewählt ist aus der Gruppe, die einen von Hand betätigten Schalter (220) auf einer Baugruppe, die das Diplexer-Mittel und die Hochfrequenzschalter (218, 219) enthält, einen externen Computer (422) und eine Mehrfachschnittstelle (420) umfasst, an eine Baugruppe, die das Diplexer-Mittel und Hochfrequenzschalter (418, 419) enthält, und an einen embedded Computer (620) senden, der in eine Baugruppe eingebaut bzw. integriert ist, die das Diplexer-Mittel und Hochfrequenzschalter (618, 619) enthält, sodass die Sendequelle, die die Hochfrequenzstation speist, durch Einstellen der Hochfrequenzschalter (218, 219) zwischen der MCU und dem wechselnden Hochfrequenzmodem (201) geschaltet wird, wobei die MCU und das wechselnde Hochfrequenzmodem (201) unabhängig davon, welche Sendequelle mit der Hochfrequenzstation verbunden ist, von der Hochfrequenzstation empfangen können.

2. Vorrichtung nach Anspruch 1, bei der höhere Datenraten als die für eine Standard-MCU verfügbaren Datenraten durch Verwendung einer vorwärts gerichteten Viterby-Fehlerkorrektur in Verbindung mit einer Reed-Solomon-Federkorrektur in dem wechselnden Hochfrequenzmodem erzielt werden.

3. Vorrichtung nach Anspruch 1, bei der höhere Datenraten als die für eine Standard-MCU verfügbaren Datenraten durch Verwendung einer vorwärtsgerichteten Turbo-Fehlerkorrektur in dem wechselnden Hochfrequenzmodem erzielt werden.

4. Vorrichtung nach Anspruch 1, bei der die MCU und die Hochfrequenzstation Satum-B-Modelle sind.

5. Vorrichtung nach Anspruch 1, bei der das wechselnde Hochfrequenzmodem ein EFData-300L ist.

6. Vorrichtung nach Anspruch 1, bei der der embedded Computer einen digitalen Signalprozessor umfasst, der einen nicht flüchtigen RAM ("NVRAM") verwendet, um Konfigurationsdaten zu speichern.

7. Vorrichtung nach Anspruch 1, die als Steuermittel einen externen Computer (422) und eine Mehrfachschnittstelle (420) verwendet, weiterhin umfassend eine zweite identische Vorrichtung nach Anspruch 1, die als Steuermittel einen externen Computer (422) und eine Mehrfachschnittstelle (420) verwendet, ein Mittel zum Verbinden des externen Computers (422) der zweiten Vorrichtung mit dem externen Computer (422) der ersten Vorrichtung, wobei die externen Computer ein Mittel verwenden um zu bestimmen, welche Vorrichtung des Paars zu einem vorgegebenen Zeitpunkt eine bessere Empfangs-Signalqualität aufweist, sowie ein Mittel, um die Vorrichtung mit der besseren Empfangs-Signalqualität auswählt, um zu einem solchen Zeitpunkt zu senden.

8. Vorrichtung nach Anspruch 1, die einen embedded Computer (620) als Steuermittel verwendet, weiterhin umfassend eine zweite identische Vorrichtung nach Anspruch 1, die einen embedded Computer (620) als Steuermittel verwendet, ein Mittel (1205), um den embedded Computer (620) der zweiten Vorrichtung mit dem embedded Computer (620) der ersten Vorrichtung zu verbinden, wobei die embedded Computer (620) ein Mittel verwenden um zu bestimmen, welche Vorrichtung des Paars eine bessere Empfangs-Signalqualität zu einem vorgegebenen Zeitpunkt aufweist, und um die Vorrichtung mit der besseren Empfangs-Signalqualität auszuwählen, um während eines solchen vorgegebenen Zeitraums zu senden.

9. Vorrichtung nach Anspruch 1, bei der das Steuermittel ein Computer (620) ist, weiterhin umfassend eine Management- und- Steuer-Netzwerkverbindung ("M&C"), die ausgewählt ist aus der Gruppe, die eine indirekte M&C-Netzwerkverbindung zwischen dem Steuermittel und einem Netzwerkmanagementsystem und eine direkte M&C-Netzwerkverbindung zwischen dem Steuermittel und einem Netzwerkmanagementsystem umfasst, wobei das Steuermittel M&C-Nachrichten empfängt, die Konfigurationsdaten enthalten, und die Sendequelle zwischen der MCU und dem wechselnden Hochfrequenzmodem (601) auf der Grundlage solcher Konfigurationsdaten wechselt.

10. Vorrichtung nach Anspruch 9, bei der das Steuermittel M&C-Nachrichten, die über die M&C-Netzwerkverbindung von dem Netzwerkmanagementsystem empfangen werden, validiert, bevor solche M&C-Nachrichten umgesetzt werden.

11. Vorrichtung nach Anspruch 9, bei der die M&C-Netzwerkverbindung zwischen dem Netzwerkmanagementsystem und dem Steuermittel eine direkte M&C-Netzwerkverbindung ist, die einen CESAL-Träger verwendet, der von dem Steuermittel überwacht wird.

12. Vorrichtung nach Anspruch 9, bei der die M&C-Nachrichten verschlüsselt sind, wenn diese sie die M&C-Netzwerkverbindung durchlaufen, die ein Verschlüsselungsverfahren verwendet, das ausgewählt ist aus der Gruppe, die eine individuelle Verschlüsselung und Entschlüsselung jeder Nachricht umfasst, wobei ein verschlüsseltes M&C-Netzwerk verwendet wird, das für eine Verschlüsselung und Entschlüsselung der Sendestrecke sorgt, die für M&C-Nachrichten verwendet wird.

13. Vorrichtung nach Anspruch 1, bei der das Steuermittel ein Computer (620) ist, weiterhin umfassend ein Mittel, um Nachrichten zwischen dem Steuermittel (620) und der MCU auszutauschen, um ein Schalten der Sendequelle zwischen der MCU und dem wechselnden Hochfrequenzmodem (601) zu koordinieren.

14. Vorrichtung nach Anspruch 13, bei der das schaltende Managementprogramm die Erfüllung von vorgegebenen ingenieurtechnischen, den Standort betreffenden und vertraglichen Bedingungen bestätigt, bevor die Sendequelle von der MCU zu dem wechselnden Hochfrequenzmodem (601) gewechselt wird, und nach dem Schalten der Sendequelle zu dem wechselnden Hochfrequenzmodem (601) die Sendequelle zurück zu der MCU schaltet, wenn ein Fehlerzustand auftritt.

15. Vorrichtung nach Anspruch 1, bei der das Steuermittel ein Computer (620) ist, weiterhin umfassend eine Verteilung des digitalen Eingabe-/Ausgabe-Bitstroms, der normalerweise das in der MCU enthaltene Satellitenmodem speist, auf einen Anschluss eines A/B-Schalters, eine Verteilung des digitalen Eingabe-/Ausgabe-Bitstroms, der normalerweise das wechselnde Hochfrequenzmodem speist, auf einen zweiten Anschluss des A/B-Schalters, sowie ein Mittel, um mithilfe des wechselnden Managementprogramms die Konfiguration und den Status des in der MCU enthaltenen Satellitenmodems zu überwachen, wobei dann, wenn das schaltende Managementprogramm einen Fehler des in der MCU enthaltenen Satellitenmodems feststellt, das schaltende Managementprogramm das wechselnde Hochfrequenzmodem (601) mit derselben Konfiguration konfiguriert, die das in der MCU enthaltene Satellitenmodem (101) unmittelbar vor dem Fehler hatte, den A/B-Schalter so schaltet, dass der digitale Eingabe-/Ausgabe-Bitstrom, der normalerweise das in der MCU enthaltene Satellitenmodem (107) speist, in das wechselnde Hochfrequenzmodem (601) eingespeist wird, und die Sendequelle, die die Hochfrequenzstation speist, von der MCU auf das wechselnde Hochfrequenzmodem schaltet, bzw. wechselt, um so für eine Redundanz für das in der MCU enthaltene Satellitenmodem (107) zu sorgen.

## Revendications

1. Moyens pour activer une unité de commande de station terrestre mobile Inmarsat-B équipée d'un modem (MCU), standard et un modem RF alternatif (201) ayant une interface à bande L pour effectuer une transmission en utilisant un terminal RF Inmarsat-B standard unique sur une base mutuellement exclusive en utilisant des moyens de diplexage et par l'intermédiaire d'au moins deux commutateurs RF (218, 219) commandés par des moyens de commande sélectionnés parmi le groupe comportant un commutateur manuel (220) sur un ensemble contenant les moyens de diplexage et les commutateurs RF (218, 219), un ordinateur externe (422) et une interface multiconducteur (420) jusqu'à un ensemble contenant les moyens de diplexage et des commutateurs RF (418, 419), et un ordinateur intégré (620) monté sur un ensemble contenant les moyens de diplexage et des commutateurs RF (618, 619), après quoi la source de transmission alimentant le terminal RF est commutée entre l'unité MCU et le modem RF alternatif (201) par le paramétrage des commutateurs RF (218, 219), et l'unité MCU et le modem RF alternatif (201) pouvant recevoir depuis le terminal RF indépendamment de la source de transmission qui est connectée au terminal RF.

2. Dispositif selon la revendication 1, dans lequel des débits de données supérieurs qui sont disponibles avec une unité MCU standard sont obtenus en utilisant une correction d'erreurs sans voie de retour (FEC) de Viterbi concaténée avec une correction d'erreurs de Reed-Solomon dans le modem RF alternatif.

3. Dispositif selon la revendication 1, dans lequel des débits de données supérieurs qui sont disponibles avec une unité MCU standard sont obtenus en utilisant une correction FEC Turbo dans le modem RF alternatif.

4. Dispositif selon la revendication 1, dans lequel l'unité MCU et le terminal RF sont des modèles Saturn B.

5. Dispositif selon la revendication 1, dans lequel le modem RF alternatif est un EFData 300L.

6. Dispositif selon la revendication 1, dans lequel l'ordinateur intégré comporte un processeur de signal numérique utilisant une mémoire à accès direct non-volatile ("NVRAM") pour mémoriser des données de configuration.

7. Dispositif selon la revendication 1 utilisant un ordinateur externe (422) et une interface multiconducteur (420) en tant que moyens de commande, comportant en outre un second dispositif identique à celui de la revendication 1 utilisant un ordinateur externe (422) et une interface multiconducteur (420) en tant que moyens de commande, des moyens pour coupler l'ordinateur externe (422) du second dispositif à l'ordinateur externe (422) du premier dispositif, et dans lequel les ordinateurs externes utilisent des moyens pour déterminer quel dispositif de la paire a la meilleure qualité de signal reçu à un instant donné quelconque, et des moyens pour sélectionner le dispositif ayant la meilleure qualité de signal reçu pour effectuer la transmission à cet instant.

8. Dispositif selon la revendication 1 utilisant un ordinateur intégré (620) en tant que moyens de commande, comportant en outre un second dispositif identique à celui de la revendication 1 utilisant un ordinateur intégré (620) en tant que moyens de commande, des moyens (1205) pour coupler l'ordinateur intégré (620) du second dispositif à l'ordinateur intégré (620) du premier dispositif, et dans lequel les ordinateurs intégrés (620) utilisent des moyens pour déterminer quel dispositif de la paire a la meilleure qualité de signal reçu à un instant donné quelconque, et pour sélectionner le dispositif ayant la meilleure qualité de signal reçu pour effectuer la transmission pendant cet instant donné.

9. Dispositif selon la revendication 1, dans lequel les moyens de commande sont un ordinateur (620), comportant en outre une connexion de réseau de gestion et de commande ("M & C") sélectionnée parmi le groupe comportant une connexion de réseau M & C indirecte entre les moyens de commande et un système de gestion de réseau et une connexion de réseau M & C directe entre les moyens de commande et un système de gestion de réseau, dans lequel les moyens de commande reçoivent des messages M & C contenant des données de configuration et commutent la source de transmission entre l'unité MCU et le modem RF alternatif (601) sur la base de ces données de configuration.

10. Dispositif selon la revendication 9, dans lequel les moyens de commande valident des messages M & C reçus via la connexion de réseau M & C en provenance du système de gestion de réseau avant d'implémenter ces messages M & C.

11. Dispositif selon la revendication 9, dans lequel la connexion de réseau M & C depuis le système de gestion de réseau jusqu'aux moyens de commande est une connexion de réseau M & C directe utilisant un système multiplex CESAL surveillé par les moyens de commande.

12. Dispositif selon la revendication 9, dans lequel les messages M & C sont cryptés lors du transit par la connexion de réseau M & C en utilisant un procédé de cryptage sélectionné parmi le groupe comportant un cryptage et un décryptage individuels de chaque message, et en utilisant un réseau M & C crypté qui fournit un cryptage et un décryptage du trajet de transmission utilisé pour les messages M & C.

13. Dispositif selon la revendication 1, dans lequel les moyens de commande sont un ordinateur (620), comportant en outre des moyens pour échanger des messages entre les moyens de commande (620) et l'unité MCU pour coordonner la commutation de la source de transmission entre l'unité MCU et le modem RF alternatif (601).

14. Dispositif selon la revendication 13, dans lequel le programme de gestion de commutation confirme la satisfaction des conditions techniques, de géolocalisation et contractuelles avant de commuter la source de transmission depuis l'unité MCU et sur le modem RF alternatif (601), et après la commutation de la source de transmission sur le modem RF alternatif (601), commute à nouveau la source de transmission sur l'unité MCU lors de l'échec d'une condition.

15. Dispositif selon la revendication 1, dans lequel les moyens de commande sont un ordinateur (620), comportant en outre la distribution d'un flux binaire d'entrée/sortie numérique alimentant normalement le modem satellite contenu dans l'unité MCU jusqu'à un port d'un commutateur A/B, la distribution du flux binaire d'entrée/sortie numérique alimentant le modem RF alternatif jusqu'à un second port du commutateur A/B, et des moyens pour surveiller, par l'intermédiaire du programme de gestion de commutation, la configuration et l'état du modem satellite contenu dans l'unité MCU, et si une défaillance du modem satellite contenu dans l'unité MCU est détectée par le programme de gestion de commutation, le programme de gestion de commutation configure le modem RF alternatif (601) selon une configuration identique à celle que le modem satellite (107) contenu dans l'unité MCU avait immédiatement avant la défaillance, commute le commutateur A/B de sorte que le flux binaire d'entrée/sortie numérique alimentant normalement le modem satellite (107) contenu dans l'unité MCU est délivré au modem RF alternatif (601), et commute la source de transmission alimentant le terminal RF depuis l'unité MCU sur le modem RF alternatif, de manière à fournir une redondance pour le modem satellite (107), contenu dans l'unité MCU.
